# EUROPEAN PATENT SPECIFICATION

(11) **EP 4 465 554 B1**
(45) Date of publication and mention of the grant of the patent: **28.10.2026**
(21) Application number: 22920262.7
(22) Date of filing: 14.01.2022
(51) Int. Cl.: H04B 10/27, H04J 14/02, H04Q 11/00

(54) **OPTICAL COMMUNICATION DEVICE AND OPTICAL COMMUNICATION METHOD**
OPTISCHE KOMMUNIKATIONSVORRICHTUNG UND OPTISCHES KOMMUNIKATIONSVERFAHREN
DISPOSITIF ET PROCÉDÉ DE COMMUNICATION OPTIQUE

(43) Date of publication of application: 20.11.2024
(73) Proprietor: NTT, Inc., Tokyo 100-8116 (JP)
(72) Inventor: SHIBATA Naotaka, Musashino-shi, Tokyo 180-8585 (JP); KANEKO Shin, Musashino-shi, Tokyo 180-8585 (JP); KANI Junichi, Musashino-shi, Tokyo 180-8585 (JP); YOSHIDA Tomoaki, Musashino-shi, Tokyo 180-8585 (JP)
(74) Representative: Santarelli
(86) International application number: PCT/JP2022/001086
(87) International publication number: WO 2023/135737

(56) References cited:
- WO-A1-2014/106575
- WO-A1-98/38709
- JP-A- 2002 510 441
- JP-A- 2006 074 806
- JP-A- 2007 028 144
- JP-A- 2009 147 913
- JP-A- 2011 259 132
- JP-A- 2013 143 746
- JP-A- H04 127 625
- JP-A- H06 318 910
- US-B1- 7 356 259
- US-B2- 7 805 075
- US-B2- 8 391 711
- CHRISTOFOROS KACHRIS ET AL: "A Survey on Optical Interconnects for Data Centers", IEEE COMMUNICATIONS SURVEYS & TUTORIALS, IEEE, USA, vol. 14, no. 4, 1 October 2012 (2012-10-01), pages 1021 - 1036, XP011471439, ISSN: 1553-877X, DOI: 10.1109/SURV.2011.122111.00069

## Description

### Technical Field

The present invention relates to an optical communication apparatus and an optical communication method.

### Background Art

Conventionally, reconfigurable optical add/drop multiplexer (ROADM) has been used for the purpose of efficiently constructing a network by connecting a plurality of bases (see Non Patent Literature 1, for example). The ROADM is a device that operates an ultra-high speed and large capacity transmission network by combining a wavelength multiplexing scheme and a path management technology.

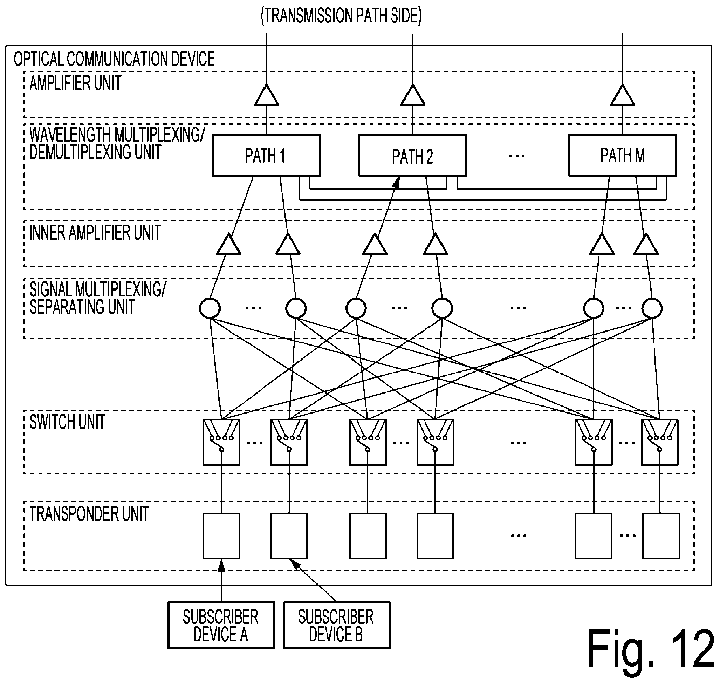

Fig. 12 is a diagram illustrating an example of an overall configuration of a conventional optical communication device using the ROADM. As illustrated in Fig. 12, the conventional optical communication device includes a transponder unit, a switch unit, a signal multiplexing/separating unit, an inner amplifier unit, a wavelength multiplexing/demultiplexing unit, and an amplifier unit.

A configuration of each functional unit of the conventional optical communication device in uplink communication is as follows. First, the transponder unit performs electrical processing on a signal received from a subscriber device by the transponder, and outputs the signal to a switch unit at a predetermined wavelength. The switch unit transfers the signal input from the transponder unit to a desired path. The signal multiplexing/separating unit multiplexes signals transferred from a plurality of switches of the switch unit, and outputs the multiplexed signals to an inner amplifier unit. In order to compensate for a loss generated in the signal multiplexing/separating unit, the inner amplifier unit amplifies signal power and outputs the amplified signals to a wavelength multiplexing/demultiplexing unit. The wavelength multiplexing/demultiplexing unit multiplexes a plurality of signals input from the signal multiplexing/separating unit, and outputs the multiplexed signals to the amplifier unit. The amplifier unit amplifies the signals input from the wavelength multiplexing/demultiplexing unit and outputs the amplified signals to the transmission path side.

A configuration of each functional unit of the conventional optical communication device in downlink communication is as follows. First, the amplifier unit amplifies signals received from the transmission path side, and outputs the amplified signals to the wavelength multiplexing/demultiplexing unit. The wavelength multiplexing/demultiplexing unit outputs the signals input from the amplifier unit to another path or to an inner amplifier unit. The inner amplifier unit amplifies the signals input from the wavelength multiplexing/demultiplexing unit and outputs the amplified signals to the signal multiplexing/separating unit. The signal multiplexing/separating unit distributes the signals input from the inner amplifier unit and outputs the distributed signals to all the switches of the switch unit. **In** order to receive a desired signal, each switch of the switch unit switches the signal multiplexing/separating unit as a connection destination, and outputs the received signal to the transponder unit. First, the transponder unit performs electrical processing on signals input from the switch unit by the transponder and transmits the signals to the subscriber device.

Note that, in general, processing of extracting a signal of an arbitrary wavelength from an input signal is performed by a transponder unit. **In** addition, the switch generally has an input and an output in one-to-M (M is the number of paths and is an arbitrary natural number) configuration. Also, the wavelength multiplexing/demultiplexing unit is configured by using a plurality of wavelength selective switches (WSSs), for example. The wavelength multiplexing/demultiplexing unit outputs a signal of a wavelength directed to a subscriber device belonging to the same base as that of the host device from among downlink signals input from the transmission path side to a WSS to a port connected to the inner amplifier unit. Also, the wavelength multiplexing/demultiplexing unit outputs a signal of a wavelength directed to a subscriber device belonging to a different base that is different from the base to which the host device belongs to a port connected to a WSS of a path to the different base.

### Citation List

### Patent Literature

Patent Literature 1: US 8 391 711 B2
Patent Literature 2: US 7 805 075 B2
Patent Literature 3: JP 2009 147913 A

### Non Patent Literature

Non Patent Literature 1: Thierry Zami, Bruno Lavigne, "Benefit of pure NxM WSS for optical multiflow application", OFC/NFOEC Technical Digest, Optical Society of America, 2013
Non Patent Literature 2: Christoforos Kachris et al.: « A survey on optical interconnects for data centers », IEEE Communications Surveys & Tutorials, IEEE, Vol. 14, No. 4, October 1, 2012, pages 1021-1036.

### Summary of Invention

### Technical Problem

In the above conventional optical communication device using the ROADM, a signal transmitted from one subscriber device always passes a path that is different from a subscriber device as a destination (that is, the path to the transmission path side in Fig. 12) in the optical communication device at least once even in a case where it is desired to perform communication between the subscriber devices under control of the same ROADM (that is, within the same base). Therefore, it is not possible to transfer a signal from the one subscriber device to the other subscriber device under control of the same ROADM (hereinafter, referred to as "return communication") only with the aforementioned conventional optical communication device.

Therefore, in a case where it is desired to perform communication between the subscriber devices under control of the same ROADM, it is necessary to newly provide a switch capable of performing processing of electrical signals in two or more layers between the optical communication device and the subscriber devices. However, in a case where the switch is newly added in this manner, there is a problem of an increase in device cost. Furthermore, even signals directed to a subscriber device belonging to a different base (that is, signals of communication that is not return communication) are also transmitted via the above newly provided switch in this case. Therefore, there is a problem of an increase in communication delay.

In view of the above circumstances, an object is to provide an optical communication apparatus and an optical communication method capable of reducing an increase in device cost and communication delay in communication both within the same base and between different bases. Solution to Problem

An aspect of the present invention is an optical communication device including a plurality of connection switching units configured to connect a first communication port connected to a first communication device under control of a host base, which is a device that operates a transmission network, to a second communication port connected to a second communication device under control of the host base, a third communication port connected to a third communication device under control of another base, and a fourth communication port connected to an electrical processing unit that performs electrical processing for reproduction relay on a signal transmitted to a fourth communication device under control of the other base; and a control unit configured to control switching of connection to the communication ports performed by each of the connection switching units on the basis of the base to which a communication device communicating with the first communication device belongs and whether or not the electrical processing is needed, the control unit is configured to:connect the first communication port to the second communication port in case where a communication device which communicate with the first communication device is under control of the host base;connect the first communication port to the third communication port in case where a communication device which communicate with the first communication device is under control of a base different to the host base and the electrical processing for reproduction relay is not needed; and connect the first communication port to the fourth communication port in case where a communication device which communicate with the first communication device is under control of a base different to the host base and the electrical processing for reproduction relay is needed.

Also, an aspect of the present invention is an optical communication device including: a plurality of connection switching units configured to connect a first communication port to a second communication port, a third communication port, and a fourth communication port; a signal multiplexing/ separating unit configured to multiplex a signal output from each of the plurality of connection switching units, configured to connect the first communication port to a first communication device under control of a host base, which is a device that operates a transmission network, configured to connect the second communication port to a second communication device under control of the host base, configured to connect the third communication port to a third communication device under control of another base, and configured to connect the fourth communication port to an electrical processing unit through the signal multiplexing/ separating unit, the signal multiplexing/separating unit performing electrical processing for reproduction relay on a signal transmitted to a fourth communication device under control of the other base; and a control unit configured to control switching of connection of the communication ports performed by the connection switching unit on the basis of the base to which the communication device communicating with the first communication device belongs and whether or not the electrical processing is needed, the control unit is configured to: connect the first communication port to the second communication port in case where a communication device which communicate with the first communication device is under control of the host base;connect the first communication port to the third communication port in case where a communication device which communicate with the first communication device is under control of a base different to the host base and the electrical processing for reproduction relay is not needed; and connect the first communication port to the fourth communication port in case where a communication device which communicate with the first communication device is under control of a base different to the host base and the electrical processing for reproduction relay is needed.

Also, an aspect of the present invention is an optical communication method a connection switching step of connecting a first communication port connected to a first communication device under control of a host base, which is a device that operates a transmission network, to a second communication port connected to a second communication device under control of the host base, a third communication port connected to a third communication device under control of another base, and a fourth communication port connected to an electrical processing unit that performs electrical processing for reproduction relay on a signal transmitted to a fourth communication device under control of the other base; and a control step of controlling switching of connection of the communication ports in the connection switching step on the basis of the base to which the communication device communicating with the first communication device belongs and whether or not the electrical processing is needed, the control step includes: connecting the first communication port to the second communication port in case where a communication device which communicate with the first communication device is under control of the host base;connecting the first communication port to the third communication port in case where a communication device which communicate with the first communication device is under control of a base different to the host base and the electrical processing for reproduction relay is not needed; and connecting the first communication port to the fourth communication port in case where a communication device which communicate with the first communication device is under control of a base different to the host base and the electrical processing for reproduction relay is needed.

Also, an aspect of the present invention is an optical communication method including: a connection switching step of connecting, by a plurality of connection switching units, a first communication port to a second communication port, a third communication port, and a fourth communication port; a signal multiplexing/separating step of multiplexing a signal output from each of the plurality of connection switching units, connecting the first communication port to a first communication device under control of a host base, which is a device that operates a transmission network, connecting the second communication port to a second communication device under control of the host base, connecting the third communication port to a third communication device under control of another base, and connecting the fourth communication port to an electrical processing unit through a signal multiplexing/separating unit, the signal multiplexing/separating unit performing electrical processing for reproduction relay on a signal transmitted to a fourth communication device under control of the other base; and a control step of controlling switching of connection of the communication ports in the connection switching step on the basis of the base to which the communication device communicating with the first communication device belongs and whether or not the electrical processing is needed, characterized in that the control step includes:connecting the first communication port to the second communication port in case where a communication device which communicate with the first communication device is under control of the host base;connecting the first communication port to the third communication port in case where a communication device which communicate with the first communication device is under control of a base different to the host base and the electrical processing for reproduction relay is not needed; and connecting the first communication port to the fourth communication port in case where a communication device which communicate with the first communication device is under control of a base different to the host base and the electrical processing for reproduction relay is needed.

### Advantageous Effects of Invention

According to the present invention, it is possible to reduce an increase in device cost and communication delay in communication both within the same base and between different bases. Brief Description of Drawings

Fig. 1 is an overall configuration diagram of an optical communication device 1 according to a first embodiment of the present invention.
Fig. 2 is a diagram for explaining details of switching processing performed by a switch unit 20 of the optical communication device 1 according to the first embodiment of the present invention.
Fig. 3 is a flowchart illustrating an operation of the optical communication device 1 according to the first embodiment of the present invention.
Fig. 4 is an overall configuration diagram of an optical communication device 1a according to a first modification example of the first embodiment of the present invention.
Fig. 5 is a diagram for explaining details of switching processing performed by a switch unit 20b of an optical communication device 1b according to a second modification example of the first embodiment of the present invention.
Fig. 6 is an overall configuration diagram of an optical communication device 1c according to a second embodiment of the present invention.
Fig. 7 is a diagram for explaining details of switching processing performed by a switch unit 20c of the optical communication device 1c according to the second embodiment of the present invention.
Fig. 8 is a flowchart illustrating an operation of the optical communication device 1c according to the second embodiment of the present invention.
Fig. 9 is an overall configuration diagram of an optical communication device 1d according to a third embodiment of the present invention.
Fig. 10 is a diagram for explaining details of switching processing performed by a switch unit 20d of the optical communication device 1d according to the third embodiment of the present invention.
Fig. 11 is a flowchart illustrating an operation of the optical communication device 1d according to the third embodiment of the present invention.
Fig. 12 is a diagram illustrating an example of an overall configuration of a conventional optical communication device using the ROADM.

### Description of Embodiments

Hereinafter, an optical communication device and an optical communication method according to embodiments will be described with reference to the drawings.

### <First Embodiment>

Hereinafter, an optical communication device 1(an optical communication apparatus) according to a first embodiment of the present invention will be described.

### [Configuration of Optical communication device]

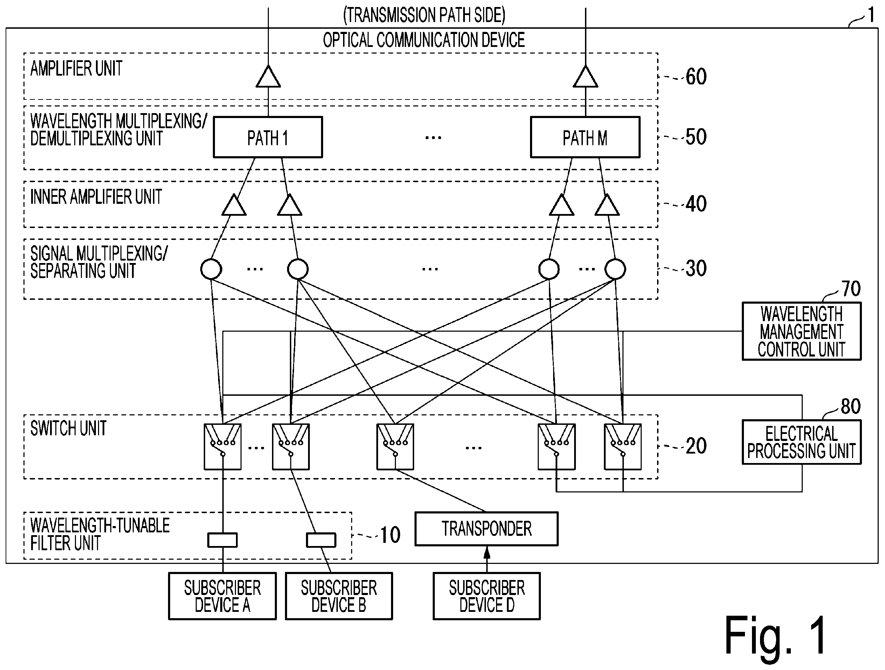

Fig. 1 is an overall configuration diagram of the optical communication device 1 according to the first embodiment of the present invention. As illustrated in Fig. 1, the optical communication device 1 is configured to include a wavelength-tunable filter unit 10, a switch unit 20, a signal multiplexing/separating unit 30, an inner amplifier unit 40, a wavelength multiplexing/demultiplexing unit 50, an amplifier unit 60, a wavelength management control unit 70, and an electrical processing unit 80.

A configuration of each functional unit of the optical communication device 1 according to the first embodiment in uplink communication is as follows.

The wavelength-tunable filter unit 10 receives a signal transmitted from a subscriber device. The wavelength-tunable filter unit 10 outputs the received signal with a predetermined wavelength to the switch unit 20.

The switch unit 20 receives an input of the signal output from the wavelength-tunable filter unit 10. The switch unit 20 is configured to include a plurality of switches. Each switch of the switch unit 20 transfers the input signal to a desired path. The desired path described here is a path to a desired coupler of the signal multiplexing/separating unit 30, a path to the wavelength management control unit 70, or a path to the electrical processing unit 80.

The signal multiplexing/separating unit 30 is configured to include a plurality of couplers. The plurality of couplers of the signal multiplexing/separating unit 30 receives an input of a signal transferred from each of the plurality of switches of the switch unit 20. The plurality of couplers of the signal multiplexing/separating unit 30 multiplexes the plurality of input signals. The signal multiplexing/separating unit 30 outputs the multiplexed signals to the inner amplifier unit 40.

The inner amplifier unit 40 receives inputs of the signals output from the signal multiplexing/separating unit 30. In order to compensate for a loss caused in signal multiplexing performed by the signal multiplexing/separating unit 30, the inner amplifier unit 40 amplifies signal power. The inner amplifier unit 40 outputs the amplified signals to the wavelength multiplexing/demultiplexing unit 50.

The wavelength multiplexing/demultiplexing unit 50 receives inputs of the plurality of signals from the inner amplifier unit 40. The wavelength multiplexing/demultiplexing unit 50 multiplexes the plurality of input signals. The wavelength multiplexing/demultiplexing unit 50 outputs the multiplexed signals to the amplifier unit 60.

The amplifier unit 60 receives inputs of the signals output from the wavelength multiplexing/demultiplexing unit 50. The amplifier unit 60 amplifies the input signals. The amplifier unit 60 outputs the amplified signals to the transmission path side.

The wavelength management control unit 70 changes a wavelength of a signal transmitted from the subscriber device. The wavelength management control unit 70 provides a wavelength instruction to the subscriber device by using an auxiliary management and control channel (AMCC), for example. The AMCC is one type of wavelength management control which is a main function of a photonic gateway (Ph-GW). Specifically, the wavelength management control unit 70 provides a wavelength instruction by transmitting a wavelength control instruction signal for providing an instruction to change a wavelength of a signal to the subscriber device, for example.

The electrical processing unit 80 is configured to include a plurality of transponders. The electrical processing unit 80 receives inputs of signals output from the switches of the switch unit 20. The electrical processing unit 80 performs electrical processing for reproduction relay on the input signals. The electrical processing for reproduction relay is processing of demodulating input signals once, modulating them again with another frequency, and outputting the modulated signals, for example. The electrical processing unit 80 outputs the signal after being subjected to the electrical processing to switches which are different from the switches as the input sources included in the switch unit 20.

The configuration of each functional unit of the optical communication device 1 according to the first embodiment in downlink communication is as follows.

The amplifier unit 60 receives an input of a signal arriving from the transmission path side. The amplifier unit 60 amplifies the input signals. The amplifier unit 60 outputs the amplified signal to the wavelength multiplexing/demultiplexing unit 50.

The wavelength multiplexing/demultiplexing unit 50 receives an input of the signal output from the amplifier unit 60. The wavelength multiplexing/demultiplexing unit 50 demultiplexes the input signal. The wavelength multiplexing/demultiplexing unit 50 outputs the demultiplexed signal to another path or to the inner amplifier unit 40.

The inner amplifier unit 40 receives an input of the signal output from the wavelength multiplexing/demultiplexing unit 50. The inner amplifier unit 40 amplifies the input signal. The inner amplifier unit 40 outputs the amplified signal to the signal multiplexing/separating unit 30.

The signal multiplexing/separating unit 30 receives an input of the signal output from the inner amplifier unit 40. The signal multiplexing/separating unit 30 distributes the input signal. The signal multiplexing/separating unit 30 outputs the distributed signal to all the switches of the switch unit 20.

Each switch of the switch unit 20 receives an input of the signal output from the signal multiplexing/separating unit 30. In order to receive a desired signal, each switch of the switch unit 20 performs switching of ports and thereby switches the signal multiplexing/separating unit 30 as a connection destination. Each switch of the switch unit 20 transmits the input signal to the subscriber device via the wavelength-tunable filter unit 10, the transponder, or the electrical processing unit 80 and a switch in the next stage.

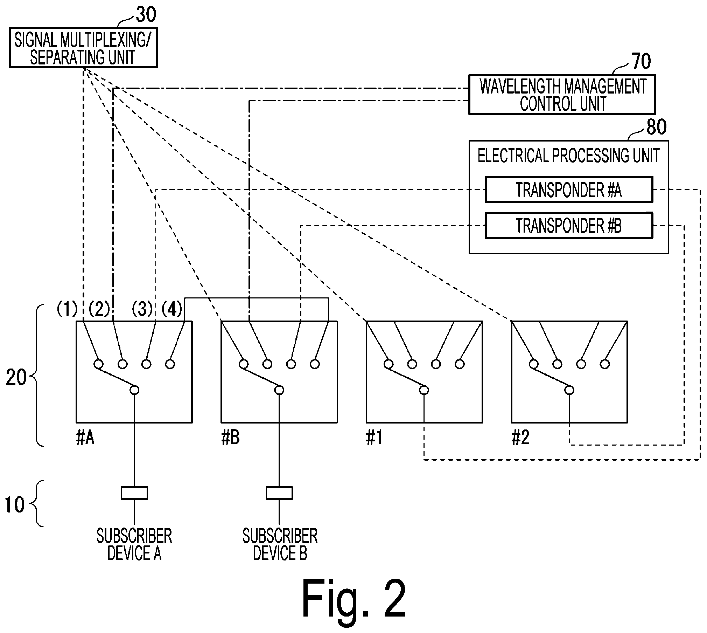

Hereinafter, a flow of a signal will be described with reference to Fig. 2. Fig. 2 is a diagram for explaining details of switching processing performed by the switch unit 20 of the optical communication device 1 according to the first embodiment of the present invention.

As illustrated in Fig. 2, each switch (a switch #A, a switch #B, a switch #1, and a switch #2) of the switch unit 20 is a switch in which an input and an output have one-to-M (M is an arbitrary natural number) configuration of connecting one port to any of a plurality of ports.

In Fig. 2, for example, the switch #A is a switch in which an input and an output have a one-to-four configuration of connecting a port (first communication port) connected to a path to a subscriber device A via the wavelength-tunable filter unit 10 to any of (1) a port (third communication port) connected to the signal multiplexing/separating unit 30, (2) a port connected to the wavelength management control unit 70, (3) a port (fourth communication port) connected to the electrical processing unit 80, and (4) a port (second communication port) for return communication connected to the switch #B.

In a case where the subscriber device A communicates with a subscriber device B that is present at the same base, the port of the switch #A is switched to (4). On the other hand, in a case where the subscriber device A connects to a subscriber device C (not illustrated) that is present at a different base, the port of the switch #A is switched to (1) or (3). Which of (1) and (3) the port of the switch #A is to be switched is determined in accordance with whether reproduction relay is needed. This determination is made by the wavelength management control unit 70, for example.

Specifically, in a case where the distance between the subscriber device A and the subscriber device C (not illustrated) is short and the reproduction relay is not needed, for example, the port of the switch #A is switched to (1). On the contrary, in a case where the distance between the subscriber device A and the subscriber device C (not illustrated) is long and reproduction relay is needed, for example, the port of the switch #A is switched to (3). In this case, the signal after a transponder (the transponder #A in Fig. 2) included in the electrical processing unit 80 performs electrical processing for reproduction relay thereon is output to the switch #1 and is then transferred to a path to the subscriber device C (not illustrated).

In this manner, the optical communication device 1 according to the first embodiment has a configuration in which electrical processing performed by the electrical processing unit 80 (for example, processing for reproduction relay performed by the transponder) is performed as needed instead of a configuration in which the processing is essential, in communication within the same base and communication between different bases. The optical communication device 1 according to the first embodiment can omit execution of the electrical processing when the electrical processing is not needed and can thereby reduce an increase in communication delay, by including such a configuration.

On the other hand, the processing for extracting a signal of an arbitrary wavelength is performed by a transponder unit in downlink communication according to the conventional technology. On the other hand, execution of the electrical processing performed by the transponder unit is not essential in the optical communication device 1 according to the first embodiment. As illustrated in Fig. 1, the optical communication device 1 according to the first embodiment includes the wavelength-tunable filter unit 10 that extracts a signal of an arbitrary wavelength instead of the transponder unit. Note that in a case where the subscriber device performs digital coherent communication similar to that of the transponder, for example, the processing of extracting a signal of an arbitrary wavelength can be performed by the subscriber device, and the wavelength-tunable filter unit 10 may not be installed.

Also, the conventional technology has a configuration in which after a signal wavelength used for a signal on the transmission path side is allocated, the transponder unit sets the wavelength of a signal to be output to the transmission path side to the allocated wavelength. Therefore, the conventional technology has a configuration in which the signal wavelength used for the signal between the transponder unit and the subscriber device can have an arbitrary wavelength regardless of the signal wavelength used for the signal on the transmission path side.

On the other hand, since the optical communication device 1 according to the first embodiment does not require the electrical processing performed by the transponder unit as essential, the signal is not necessarily transmitted via the transponder. Therefore, since there is a case where the signal is not transmitted via the transponder in the optical communication device 1 according to the first embodiment, the optical communication device 1 cannot be configured to perform setting of the wavelength by using the transponder as in the conventional technology. Therefore, the wavelength of the signal transmitted from the subscriber device has to be the same as the wavelength used for the signal on the transmission path side in the optical communication device 1 according to the first embodiment.

The optical communication device 1 according to the first embodiment switches the port of the switch #A illustrated in Fig. 2 to (2) to change the wavelength of the signal transmitted from the subscriber device A, for example. In this manner, a wavelength control instruction signal is transmitted from the wavelength management control unit 70 to the subscriber device to provide a wavelength instruction. The wavelength management control unit 70 provides the wavelength instruction to the subscriber device by using the AMCC, for example.

Unlike the aforementioned conventional technology, the switch #A and the switch #B are required not only to be connected to a desired coupler of the signal multiplexing/separating unit 30 but also to perform connection to the wavelength management control unit 70, connection to the electrical processing unit 80, and connection for return communication, in the optical communication device 1 in the first embodiment. Therefore, the optical communication device 1 according to the first embodiment is required to increase the number of ports of the switches or reduce the number of paths as connection destinations as compared with the aforementioned conventional technology.

In the optical communication device 1 according to the first embodiment, it is only necessary for the switch #1 and the switch #2 illustrated in Fig. 2 to switch a communication path through which the signal after being subjected to the electrical processing performed by the transponder of the electrical processing unit 80 is transmitted to a port connected to a desired path, unlike the switch #A and the switch #B. Note that as described above, the roles of the switch #1 and the switch #2 are different from those of the switch #A and the switch #B, and the switch #1 and the switch #2 can change the number of ports.

In other words, it is possible to set the m value and the n value to be mutually different values if the switches connected directly to the subscriber devices (the switch #A and the switch #B in Fig. 2) are switches connected at ports in which inputs and outputs have a one-to-m (m is an arbitrary natural number) configuration and switches that are not connected to directly to the subscriber devices and are connected directly only to the electrical processing unit (the switch #1 and the switch #2 in Fig. 2) are switches connected at ports in which inputs and outputs have a one-to-n (n is an arbitrary natural number) configuration.

Unlike the conventional technology described above, the signal multiplexing/separating unit 30 is connected not only to the switch #A and the switch #B but also to the switch #1 and the switch #2 as described above in the optical communication device 1 according to the first embodiment. Therefore, in order not to decrease the number of subscriber devices that can be accommodated due to the switch #1 and the switch #2 with different roles being provided in this manner, the number of couplers in the signal multiplexing/separating unit 30 or the number of ports per coupler may be increased. Note that in a case where the number of couplers in the signal multiplexing/separating unit 30 is increased, it is necessary to increase the number of amplifiers in the inner amplifier unit 40 and the number of ports of the wavelength multiplexing/demultiplexing unit 50 as well.

Note that although the overall configuration diagram illustrated in Fig. 1 is illustrated on the assumption that uplink communication and downlink communication are performed by one fiber on the transmission path side, a configuration in which uplink communication and downlink communication are performed by mutually different fibers may also be adopted. In this case, it is necessary to separately provide a configuration for uplink communication and a configuration for downlink configuration in the entire section from the switch unit 20 to the amplifier unit 60.

Also, it is considered that a risk that a subscriber device which is not allowed to perform communication connects to the switch unit 20 with no permission may occur in the optical communication device 1 according to the first embodiment. In this case, there is a likelihood that a signal transmitted by the subscriber device which is not allowed to perform communication interferes with signals transmitted and received by other subscriber devices who are allowed to perform communication. Such a risk can be addressed by adding, to the optical communication device 1, a configuration in which a port of a switch that may be connected to the subscriber device that is not allowed to perform communication is switched to a vacant port that is not connected anywhere, a configuration in which the power of the switch is turned off, a configuration in which a wavelength-tunable filter is installed in the uplink direction as well to prevent a signal not permitted from flowing, or the like.

The above optical communication device 1 according to the first embodiment can be configured by using hardware of ROADM. The wavelength management control unit 70 can be implemented as software on the same hardware as that of the control unit for the switches and the transponders which are also included in the conventional optical communication device using hardware of ROADM. Additionally, the electrical processing unit 80 can also be implemented as software on the same hardware as that of the control unit for the conventional transponders. In this manner, the optical communication device 1 according to the first embodiment can provide communication with a lower delay while reducing an increase in device cost since it is possible to take advantage of the ROADM technology used in conventional optical transmission devices that have widely been distributed in network construction these days.

In addition, the optical communication device 1 according to the first embodiment can be used together with the conventional technology. For example, the optical communication device 1 according to the first embodiment can accommodate a subscriber device (for example, the subscriber device D illustrated in Fig. 1) that performs conventional communication via a transponder like the subscriber device D illustrated in Fig. 1 and a subscriber device (for example, the subscriber device A and the subscriber device B illustrated in Fig. 1) that performs communication that does not require electrical processing as an essential matter (communication that does not require to be performed via any transponder as an essential matter), at the same time.

In other words, in a case where the technology included in the optical communication device 1 according to the first embodiment is introduced, it is not always necessary to completely replace the conventional optical communication device that has already been installed with the new optical communication device 1. Therefore, it is possible to add subscriber devices (for example, the subscriber device A and the subscriber device B illustrated in Fig. 1) that perform communication that does not require electrical processing as an essential matter (communication that does not require to be performed via any transponder as an essential matter) later merely by separately installing a switch, without affecting a service during operation even in a case where the subscriber device D illustrated in Fig. 1 is in operation.

Note that the wavelength management control unit 70 of the optical communication device 1 according to the first embodiment may have a configuration integrated with the control unit that controls a wavelength of the transponder included in the conventional optical communication device. In this case, the wavelength management control unit 70 can comprehensively manage the wavelength of the transponder and the wavelengths of the subscriber devices. In a case where a range of the wavelength available for the transponder and a range of the wavelengths available for the subscriber devices have an overlapping part, for example, such comprehensive management is needed.

Note that the wavelength management control unit 70 of the optical communication device 1 according to the first embodiment may have a configuration separated from the control unit that controls the wavelength of the transponder included in the conventional optical communication device. In this case, it is necessary that the range of the wavelength available for the transponder and the range of the wavelengths available for the subscriber devices to be separated in advance.

Also, a signal transmitted from a subscriber device that requires reproduction relay passes to the transmission path side via the transponder (electrical processing unit 80) once in the optical communication device 1 as illustrated in Fig. 2. In such a case, the signal between the subscriber device and the transponder is not multiplexed with another signal, and a configuration capable of allocating an arbitrary wavelength to the signal transmitted from the subscriber device may thus be adopted. The optical communication device 1 according to the first embodiment can thus effectively use the wavelength.

### [Operations of Optical Communication Device]

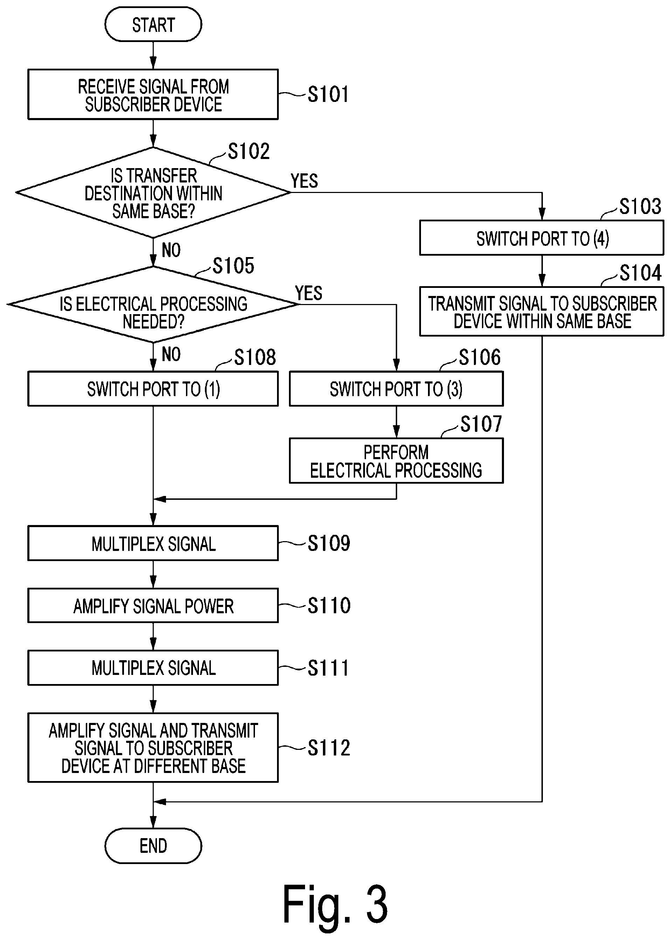

Operations of the optical communication device 1 according to the first embodiment will be described. Hereinafter, operations of the optical communication device 1 in uplink communication will be described as an example. Fig. 3 is a flowchart illustrating operations of the optical communication device 1 according to the first embodiment of the present invention.

First, the wavelength-tunable filter unit 10 receives a signal transmitted from the subscriber device A illustrated in Fig. 1, for example (Step S101). The wavelength-tunable filter unit 10 outputs the received signal with a predetermined wavelength to the switch unit 20.

Next, the switch unit 20 receives an input of the signal output from the wavelength-tunable filter unit 10. Each switch of the switch unit 20 transfers the input signal to a desired path. Here, the switch unit 20 switches the port of the switch #A illustrated in Fig. 2 to (4) (Step S103) if the input signal is a signal to be transferred to the subscriber device B illustrated in Fig. 1, for example, that is present at the same base (Step S102; YES). In this manner, the signal is output to the switch #B illustrated in Fig. 2.

The switch #B of the switch unit 20 receives an input of the signal output from the switch #A. The switch #B transmits the input signal to the subscriber device B that is present at the same base (Step S104). The operations of the optical communication device 1 illustrated by the flowchart in Fig. 3 end in this manner.

On the other hand, if the input signal is a signal to be transferred to the subscriber device C (not illustrated) that is present at a different base (Step S102; NO), and the distance between the subscriber device A and the subscriber device C (not illustrated) is equal to or greater than a predetermined distance (in other words, the distance requiring electrical processing for reproduction relay) (Step S103; YES), the switch unit 20 switches the port of the switch #A illustrated in Fig. 2 to (3) (Step S106).

In this manner, the signal is output to the electrical processing unit 80. The electrical processing unit 80 performs electrical processing for reproduction relay on the input signal (Step S107). The signal after being subjected to the electrical processing is output to the signal multiplexing/separating unit 30 via the switch #1 of the switch unit 20 illustrated in Fig. 2.

On the other hand, if the input signal is a signal to be transferred to the subscriber device C (not illustrated) that is present at a different base (Step S102; NO), and the distance between the subscriber device A and the subscriber device C (not illustrated) is a distance (that is, the distance that does not require electrical processing for reproduction relay) that is shorter than the predetermined distance (Step S103; NO), the switch unit 20 switches the port of the switch #A illustrated in Fig. 2 to (1) (Step S108). In this manner, the signal is output to the signal multiplexing/separating unit 30.

Next, the signal multiplexing/separating unit 30 receives an input of the signal output from the switch unit 20. The signal multiplexing/separating unit 30 multiplexes the input signal and other signals output from the switch unit 20 (Step S109). The signal multiplexing/separating unit 30 outputs the multiplexed signals to the inner amplifier unit 40.

Next, the inner amplifier unit 40 receives inputs of the signals output from the signal multiplexing/separating unit 30. The inner amplifier unit 40 amplifies signal power in order to compensate for a loss caused in signal multiplexing performed by the signal multiplexing/separating unit 30 (Step S110). The inner amplifier unit 40 outputs the amplified signals to the wavelength multiplexing/demultiplexing unit 50.

Next, the wavelength multiplexing/demultiplexing unit 50 receives inputs of the signals output from the inner amplifier unit 40. The wavelength multiplexing/demultiplexing unit 50 multiplexes the input signals with other signals output from the inner amplifier unit 40 (Step S111). The wavelength multiplexing/demultiplexing unit 50 outputs the multiplexed signal to the amplifier unit 60.

Next, the amplifier unit 60 receives an input of the signal output from the wavelength multiplexing/demultiplexing unit 50. The amplifier unit 60 amplifies the input signals. The amplifier unit 60 transmits the amplified signals to the subscriber device (for example, the subscriber device C, which is not illustrated) at a different base via the transmission path (Step S112). The operations of the optical communication device 1 illustrated by the flowchart in Fig. 3 end in this manner.

As described above, the optical communication device 1 according to the first embodiment of the present invention can perform return communication. The optical communication device 1 according to the first embodiment uses an ROADM device configuration, for example, and can perform communication that does not require execution of electrical processing by the transponder as an essential matter.

Specifically, the optical communication device 1 according to the first embodiment switches the port of each switch of the switch unit 20 to a port that enables return communication in a case of communication between subscriber devices within the same ROADM (within the host base). Also, the optical communication device 1 according to the first embodiment performs switching of the port of each switch of the switch unit 20 on the basis of whether or not reproduction relay is needed in a case of communication between the subscriber device at the host base and the subscriber device at another base.

With such a configuration, the optical communication device 1 according to the first embodiment of the present invention can reduce an increase in device cost and communication delay in communication both within the same base and between different bases.

### <First Modification Example of First Embodiment>

Hereinafter, an optical communication device 1a(an optical communication apparatus) according to a first modification example of the first embodiment of the present invention will be described.

### [Configuration of Optical communication device]

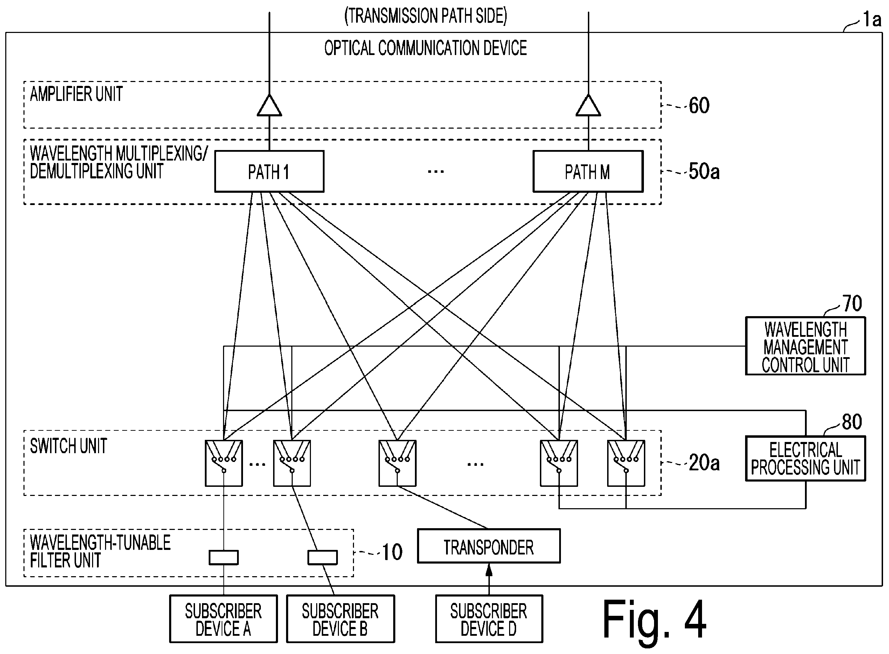

Fig. 4 is an overall configuration diagram of the optical communication device 1a according to the first modification example of the first embodiment of the present invention. As illustrated in Fig. 4, the optical communication device 1a is configured to include a wavelength-tunable filter unit 10, a switch unit 20a, a wavelength multiplexing/demultiplexing unit 50a, an amplifier unit 60, a wavelength management control unit 70, and an electrical processing unit 80.

The configuration of each functional unit of the optical communication device 1a according to the first modification example of the first embodiment in uplink communication is as follows.

The wavelength-tunable filter unit 10 receives a signal transmitted from a subscriber device. The wavelength-tunable filter unit 10 outputs the received signal with a predetermined wavelength to the switch unit 20a.

The switch unit 20a receives an input of the signal output from the wavelength-tunable filter unit 10. The switch unit 20a is configured to include a plurality of switches. Each switch of the switch unit 20a transfers the input signal to a desired path. The desired path described here is a path to the wavelength multiplexing/demultiplexing unit 50a, a path to the wavelength management control unit 70, or a path to the electrical processing unit 80.

The wavelength multiplexing/demultiplexing unit 50a receives an input of the signal transferred from each of the plurality of switches of the switch unit 20a. The wavelength multiplexing/demultiplexing unit 50a multiplexes the plurality of input signals. The wavelength multiplexing/demultiplexing unit 50a outputs the multiplexed signals to the amplifier unit 60.

The amplifier unit 60 receives inputs of the signals output from the wavelength multiplexing/demultiplexing unit 50a. The amplifier unit 60 amplifies the input signals. The amplifier unit 60 outputs the amplified signals to the transmission path side.

The wavelength management control unit 70 changes a wavelength of a signal transmitted from the subscriber device. The wavelength management control unit 70 provides the wavelength instruction to the subscriber device by using the AMCC, for example. Specifically, the wavelength management control unit 70 provides a wavelength instruction by transmitting a wavelength control instruction signal for providing an instruction to change a wavelength of a signal to the subscriber device, for example.

The electrical processing unit 80 is configured to include a plurality of transponders. The electrical processing unit 80 receives inputs of signals output from the switches of the switch unit 20a. The electrical processing unit 80 performs electrical processing for reproduction relay on the input signals. The electrical processing unit 80 outputs the signals after being subjected to the electrical processing to switches which are different from the switches as the input sources included in the switch unit 20a.

The configuration of each functional unit of the optical communication device 1a according to the first modification example of the first embodiment in downlink communication is as follows.

The amplifier unit 60 receives an input of a signal arriving from the transmission path side. The amplifier unit 60 amplifies the input signals. The amplifier unit 60 outputs the amplified signals to the wavelength multiplexing/demultiplexing unit 50a.

The wavelength multiplexing/demultiplexing unit 50a receives inputs of the signals output from the amplifier unit 60. The wavelength multiplexing/demultiplexing unit 50a demultiplexes the input signals. The wavelength multiplexing/demultiplexing unit 50a outputs the demultiplexed signals to all the switches of the switch unit 20a.

Each switch of the switch unit 20a receives inputs of the signals output from the wavelength multiplexing/demultiplexing unit 50a. In order to receive a desired signal, each switch of the switch unit 20a switches the wavelength multiplexing/demultiplexing unit 50a as a connection destination by switching ports. Each switch of the switch unit 20a transmits the input signal to the subscriber device via the wavelength-tunable filter unit 10, the transponder, or the electrical processing unit 80 and a switch in the next stage.

The aforementioned optical communication device 1 according to the first embodiment has a configuration including the signal multiplexing/separating unit 30. This is a configuration for the purpose of increasing the number of subscriber devices that can be accommodated. Also, the aforementioned optical communication device 1 according to the first embodiment has a configuration including the inner amplifier unit 40. This is a configuration for the purpose of compensating for a loss of signal in the signal multiplexing/separating unit 30 of the optical communication device 1.

On the other hand, the configuration of the signal multiplexing/separating unit 30 and the inner amplifier unit 40 are omitted as illustrated in Fig. 4 in the optical communication device 1a according to the first modification example of the first embodiment. With such a configuration, the number of subscriber devices that can be accommodated in the optical communication device 1a according to the first modification example of the first embodiment may be smaller than that of the aforementioned optical communication device 1 according to the first embodiment. However, the optical communication device 1a according to the first modification example of the first embodiment can further reduce occurrence of communication delay by including such a configuration.

### <Second Modification Example of First Embodiment>

Hereinafter, an optical communication device 1b(an optical communication apparatus) according to a second modification example of the first embodiment of the present invention will be described.

### [Configuration of Optical communication device]

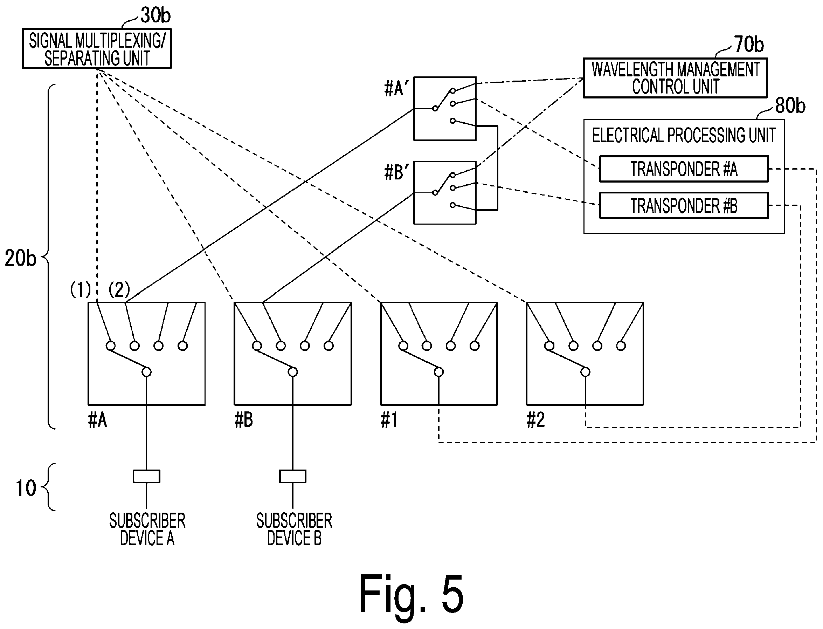

Since an overall configuration diagram of the optical communication device 1b according to the second modification example of the first embodiment is similar to the overall configuration diagram of the aforementioned optical communication device 1 according to the first embodiment illustrated in Fig. 1, description will be omitted. Fig. 5 is a diagram for explaining details of switching processing performed by the switch unit 20b of the optical communication device 1b according to the second modification example of the first embodiment of the present invention.

In the aforementioned optical communication device 1 according to the first embodiment, the switch #A and the switch #B connecting the subscriber device and each path are provided with separate ports to each of a path to the wavelength management control unit 70, a path to the electrical processing unit 80, and a path to the subscriber device as return destination. In other words, in the aforementioned optical communication device 1 according to the first embodiment, the switch #A and the switch #B connecting the subscriber device to each path are provided with (2) the port connected to the wavelength management control unit 70, (3) the port connected to the electrical processing unit 80, and (4) the port serving as a path to the subscriber device as the return destination as illustrated in Fig. 2.

On the other hand, only one port (only (2) the port in Fig. 5) is added to each of the switch #A and the switch #B (to the conventional technology) as illustrated in Fig. 5 in the optical communication device 1b according to the second modification example of the first embodiment. Each added port is further connected to a different switch (the switch #A' and the switch #B' in Fig. 5). Also, these different switches (the switch #A' and the switch #B') perform switching to ports connected to the path to a wavelength management control unit 70b, the path to an electrical processing unit 80b, or the path to the subscriber device as a return destination (from the switch #A' to the switch #B' or from the switch #B' to the switch #A') according to this configuration.

With such a configuration, a total number of the switches included in the switch unit 20b in the optical communication device 1b according to the second modification example of the first embodiment may increase as compared with the aforementioned optical communication device 1 according to the first embodiment. However, the optical communication device 1b according to the second modification example of the first embodiment can curb an increase in number of ports to be added to the switch #A and the switch #B (to the conventional technology) by including such a configuration.

Note that a wavelength multiplexer/demultiplexer such as an arrayed waveguide gratings (AWG) or a WSS or a coupler may be used instead of the switch #A' and the switch #B'.

### <Second Embodiment>

Hereinafter, an optical communication device 1c(an optical communication apparatus) according to a second embodiment of the present invention will be described.

### [Configuration of Optical communication device]

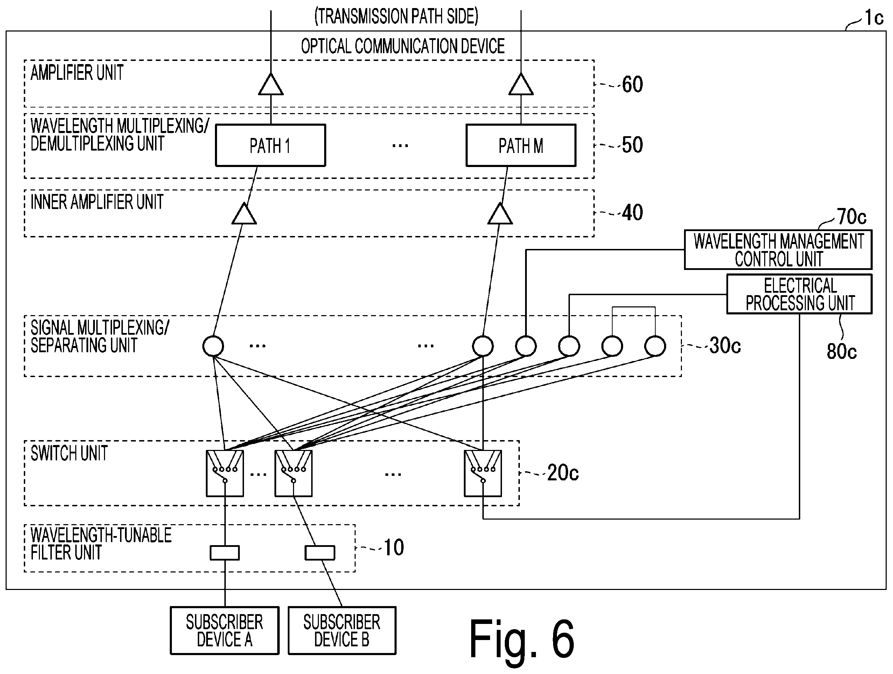

Fig. 6 is an overall configuration diagram of the optical communication device 1c according to the second embodiment of the present invention. As illustrated in Fig. 6, the optical communication device 1c is configured to include a wavelength-tunable filter unit 10, a switch unit 20c, a signal multiplexing/separating unit 30c, an inner amplifier unit 40, a wavelength multiplexing/demultiplexing unit 50, an amplifier unit 60, a wavelength management control unit 70c, and an electrical processing unit 80c.

A configuration of each functional unit of the optical communication device 1c according to the second embodiment in uplink communication is as follows.

The wavelength-tunable filter unit 10 receives a signal transmitted from a subscriber device. The wavelength-tunable filter unit 10 outputs the received signal with a predetermined wavelength to the switch unit 20c.

The switch unit 20c receives an input of the signal output from the wavelength-tunable filter unit 10. The switch unit 20c is configured to include a plurality of switches. Each switch of the switch unit 20c transfers the input signal to a desired path. The desired path described here is a path to a desired coupler of the signal multiplexing/separating unit 30c, a path to the wavelength management control unit 70c (via the signal multiplexing/separating unit 30c), a path to the electrical processing unit 80c (via the signal multiplexing/separating unit 30c), or a path to the subscriber device as a destination of return communication (via the signal multiplexing/separating unit 30c).

The signal multiplexing/separating unit 30c is configured to include a plurality of couplers. The plurality of couplers of the signal multiplexing/separating unit 30c receive an input of a signal transferred from each of the plurality of switches of the switch unit 20c. The plurality of couplers of the signal multiplexing/separating unit 30c multiplex the plurality of input signals. The signal multiplexing/separating unit 30c outputs the multiplexed signals to the inner amplifier unit 40.

Alternatively, the coupler of the signal multiplexing/separating unit 30c outputs the signals to the wavelength management control unit 70c, the electrical processing unit 80c, or another coupler as a path to the subscriber device that is a destination of return communication.

The inner amplifier unit 40 receives inputs of the signals output from the signal multiplexing/separating unit 30c. In order to compensate for a loss caused in signal multiplexing performed by the signal multiplexing/separating unit 30c, the inner amplifier unit 40 amplifies signal power. The inner amplifier unit 40 outputs the amplified signals to the wavelength multiplexing/demultiplexing unit 50.

The wavelength multiplexing/demultiplexing unit 50 receives inputs of the plurality of signals from the inner amplifier unit 40. The wavelength multiplexing/demultiplexing unit 50 multiplexes the plurality of input signals. The wavelength multiplexing/demultiplexing unit 50 outputs the multiplexed signals to the amplifier unit 60.

The amplifier unit 60 receives inputs of the signals output from the wavelength multiplexing/demultiplexing unit 50. The amplifier unit 60 amplifies the input signals. The amplifier unit 60 outputs the amplified signals to the transmission path side.

The wavelength management control unit 70c changes a wavelength of a signal transmitted from the subscriber device. The wavelength management control unit 70 provides the wavelength instruction to the subscriber device by using the AMCC, for example. Specifically, the wavelength management control unit 70c provides a wavelength instruction by transmitting a wavelength control instruction signal for providing an instruction to change a wavelength of a signal to the subscriber device, for example.

The electrical processing unit 80c is configured to include at least one transponder. The electrical processing unit 80c receives inputs of the signals output from the signal multiplexing/separating unit 30c. The electrical processing unit 80c performs electrical processing for reproduction relay on the input signals. The electrical processing for reproduction relay is processing of demodulating input signals once, modulating them again with another frequency, and outputting the modulated signals. The electrical processing unit 80c outputs the signal after being subjected to the electrical processing to another switch that is different from the switch of the switch unit 20c as a source of the input to the signal multiplexing/separating unit 30c that has received the input of the signal.

The configuration of each functional unit of the optical communication device 1 according to the first embodiment in downlink communication is as follows.

The amplifier unit 60 receives an input of a signal arriving from the transmission path side. The amplifier unit 60 amplifies the input signals. The amplifier unit 60 outputs the amplified signal to the wavelength multiplexing/demultiplexing unit 50.

The wavelength multiplexing/demultiplexing unit 50 receives an input of the signal output from the amplifier unit 60. The wavelength multiplexing/demultiplexing unit 50 demultiplexes the input signal. The wavelength multiplexing/demultiplexing unit 50 outputs the demultiplexed signal to another path or to the inner amplifier unit 40.

The inner amplifier unit 40 receives an input of the signal output from the wavelength multiplexing/demultiplexing unit 50. The inner amplifier unit 40 amplifies the input signal. The inner amplifier unit 40 outputs the amplified signal to the signal multiplexing/separating unit 30c.

The signal multiplexing/separating unit 30c receives an input of the signal output from the inner amplifier unit 40. The signal multiplexing/separating unit 30c distributes the input signal. The signal multiplexing/separating unit 30 outputs the distributed signal to all the switches of the switch unit 20c.

Each switch of the switch unit 20c receives an input of the signal output from the signal multiplexing/separating unit 30c. In order to receive a desired signal, each switch of the switch unit 20c switches the signal multiplexing/separating unit 30c as a connection destination by switching the ports. Each switch of the switch unit 20c transmits the input signal to the subscriber device via the wavelength-tunable filter unit 10, the transponder, or the electrical processing unit 80c and the switch in the next stage and the coupler of the signal multiplexing/separating unit 30c in the next stage.

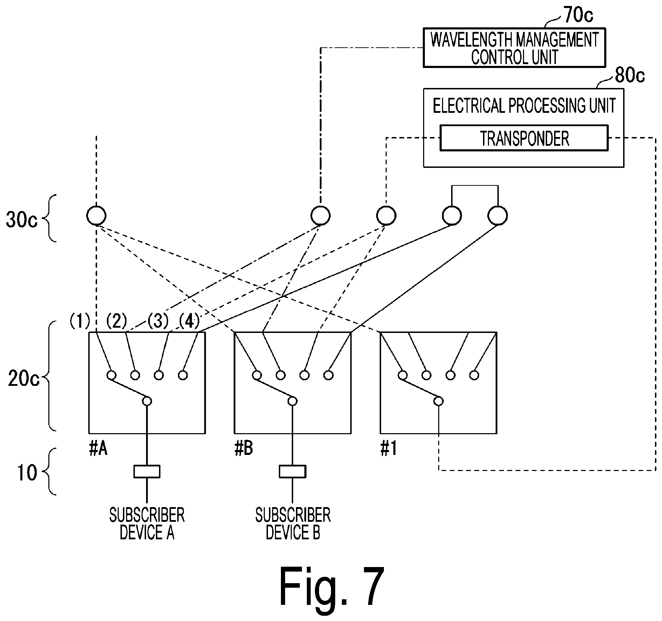

Hereinafter, a flow of a signal will be described with reference to Fig. 7. Fig. 7 is a diagram for explaining details of the switching processing performed by the switch unit 20c and the signal multiplexing/separating unit 30c of the optical communication device 1c according to the second embodiment of the present invention.

The optical communication device 1c according to the second embodiment has a configuration in which connection to the wavelength management control unit 70c, connection to the electrical processing unit 80c, and return communication are performed by the signal multiplexing/separating unit 30c instead of the switch unit 20c unlike the aforementioned optical communication device 1 according to the first embodiment.

In the optical communication device 1 according to the first embodiment, the wavelength management control unit 70 and the electrical processing unit 80 are connected to the switch #A and the switch #B with mutually different ports as illustrated in Fig. 2. On the other hand, the switch #A and the switch #B are configured such that signals are transmitted via the signal multiplexing/separating unit 30c between the wavelength management control unit 70c and the electrical processing unit 80c as illustrated in Fig. 7 in the optical communication device 1c according to the second embodiment. In this manner, the wavelength management control unit 70c and the electrical processing unit 80c can be connected to the switch #A and the switch #B by using one port.

With such a configuration, the optical communication device 1c according to the second embodiment can reduce the number of ports needed by the wavelength management control unit 70c and the electrical processing unit 80c as compared with the aforementioned optical communication device 1 according to the first embodiment. However, according to the configuration of the optical communication device 1c in the second embodiment, it is difficult to send separate signals at the same time with the configuration as described above, and processing for avoiding interference due to time division or the like is thus additionally needed.

As illustrated in Fig. 7, in a case where the subscriber device A communicates with the subscriber device B, the port of the switch #A is changed to (4). Here, the coupler includes a plurality of ports, and in a case where other subscriber devices are connected to the ports, the subscriber device A can thus communicate with the other subscriber devices. Therefore, the optical communication device 1c according to the second embodiment enables connection between a certain subscriber device and a plurality of other subscriber devices even if the number of ports of the switch is one, unlike the aforementioned optical communication device 1 according to the first embodiment.

Also, the optical communication device 1c according to the second embodiment can perform multi-cast communication since the signals are distributed to all the ports in a case where the signal multiplexing/separating unit 30c is configured of a plurality of couplers. Also, in a case where signals are distributed to all the ports in this manner, a case where there are subscriber devices that do not need the signals is also conceivable. Such a case may be addressed by appropriately setting a connection destination with a switch under control or by using a wavelength-tunable filter to perform setting such that unnecessary wavelengths are not allowed to pass, for the subscriber devices that do not need such signals.

Note that the optical communication device 1c according to the second embodiment may be configured such that only one port is added to each of the switch #A and the switch #B (to the conventional technology) and the added port is further connected to yet another switch (the switch #A' and the switch #B' in Fig. 5), like the configuration of the aforementioned optical communication device 1b according to the second modification example of the first embodiment illustrated in Fig. 5.

Then, these other switches (the switch #A' and the switch #B') may select a coupler connected to the wavelength management control unit 70c, a coupler connected to the electrical processing unit 80c, or a coupler connected to the return destination (from the switch #A' to the switch #B' or from the switch #B' to the switch #A') according to this configuration. In this case, since the signal is multiplexed between the subscriber device and the electrical processing unit 80c, it is only necessary for the wavelength management control unit 70c to allocate different wavelengths under control of the same signal multiplexing/separating unit 30c to prevent the wavelengths from competing against each other.

### [Operations of Optical Communication Device]

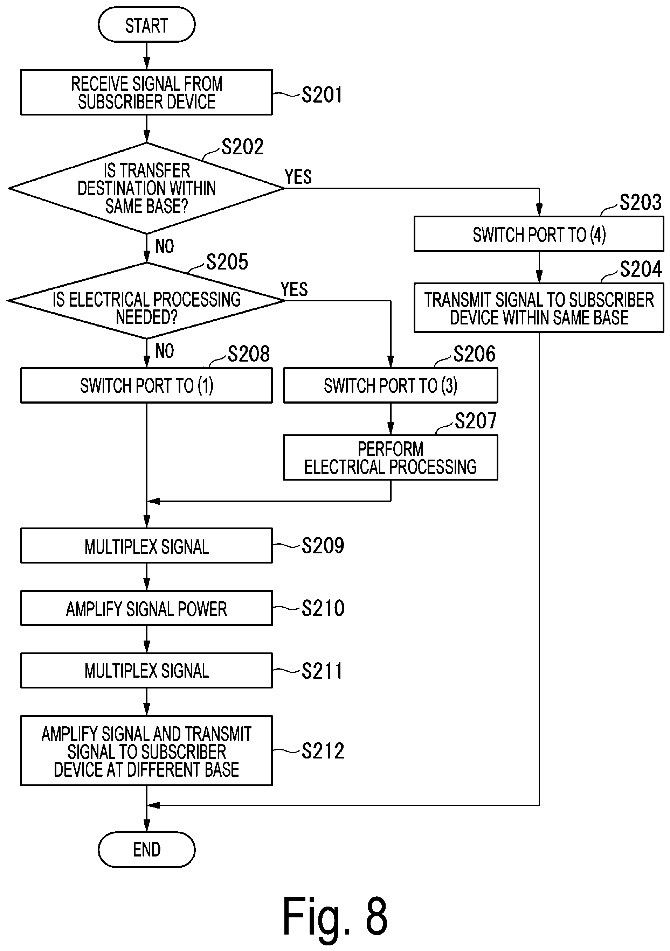

Hereinafter, operations of the optical communication device 1c according to the second embodiment will be described. Hereinafter, operations of the optical communication device 1c in uplink communication will be described as an example. Fig. 8 is a flowchart illustrating operations of the optical communication device 1c according to the second embodiment of the present invention.

First, the wavelength-tunable filter unit 10 receives a signal transmitted from the subscriber device A illustrated in Fig. 1, for example (Step S201). The wavelength-tunable filter unit 10 outputs the received signal with a predetermined wavelength to the switch unit 20c.

Next, the switch unit 20c receives an input of the signal output from the wavelength-tunable filter unit 10. Each switch of the switch unit 20 transfers the input signal to a desired path. Here, the switch unit 20 switches the port of the switch #A illustrated in Fig. 7 to (4) (Step S203) if the input signal is a signal to be transferred to the subscriber device B illustrated in Fig. 6, for example, that is present at the same base (Step S202; YES). In this manner, the signal is output to the switch #B illustrated in Fig. 7 via the signal multiplexing/separating unit 30c.

The switch #B of the switch unit 20c receives an input of the signal output from the switch #A. The switch #B transmits the input signal to the subscriber device B that is present at the same base (Step S204). The operations of the optical communication device 1 illustrated by the flowchart in Fig. 8 end in this manner.

On the other hand, if the input signal is a signal to be transferred to the subscriber device C (not illustrated) that is present at a different base (Step S202; NO), and the distance between the subscriber device A and the subscriber device C (not illustrated) is equal to or greater than a predetermined distance (in other words, the distance requiring electrical processing for reproduction relay) (Step S203; YES), the switch unit 20c switches the port of the switch #A illustrated in Fig. 7 to (3) (Step S206).

In this case, the signal is output to the electrical processing unit 80c via the signal multiplexing/separating unit 30c. The electrical processing unit 80c performs electrical processing for reproduction relay on the input signal (Step S207). The signal after being subjected to the electrical processing is output to the signal multiplexing/separating unit 30c via the switch #1 of the switch unit 20c illustrated in Fig. 7.

On the other hand, if the input signal is a signal to be transferred to the subscriber device C (not illustrated) that is present at a different base (Step S202; NO), and the distance between the subscriber device A and the subscriber device C (not illustrated) is a distance (in other words, the distance that does not require electrical processing for reproduction relay) that is shorter than the predetermined distance (Step S203; NO), the switch unit 20c switches the port of the switch #A illustrated in Fig. \7 to (1) (Step S208). In this manner, the signal is output to the signal multiplexing/separating unit 30c.

Next, the signal multiplexing/separating unit 30c receives an input of the signal output from the switch unit 20c. The signal multiplexing/separating unit 30c multiplexes the input signal and other signals output from the switch unit 20c (Step S209). The signal multiplexing/separating unit 30c outputs the multiplexed signals to the inner amplifier unit 40.

Next, the inner amplifier unit 40 receives inputs of the signals output from the signal multiplexing/separating unit 30c. The inner amplifier unit 40 amplifies signal power in order to compensate for a loss caused in signal multiplexing performed by the signal multiplexing/separating unit 30c (Step S210). The inner amplifier unit 40 outputs the amplified signals to the wavelength multiplexing/demultiplexing unit 50.

Next, the wavelength multiplexing/demultiplexing unit 50 receives inputs of the signals output from the inner amplifier unit 40. The wavelength multiplexing/demultiplexing unit 50 multiplexes the input signals with other signals output from the inner amplifier unit 40 (Step S211). The wavelength multiplexing/demultiplexing unit 50 outputs the multiplexed signal to the amplifier unit 60.

Next, the amplifier unit 60 receives an input of the signal output from the wavelength multiplexing/demultiplexing unit 50. The amplifier unit 60 amplifies the input signals. The amplifier unit 60 outputs the amplified signals to the subscriber device (for example, the subscriber device C, which is not illustrated) at a different base via the transmission path (Step S212). The operations of the optical communication device 1c illustrated by the flowchart in Fig. 8 end in this manner.

As described above, the optical communication device 1c according to the second embodiment of the present invention can perform return communication. The optical communication device 1c according to the second embodiment uses an ROADM device configuration, for example, and can perform communication that does not require execution of electrical processing by the transponder as an essential matter.

Specifically, the optical communication device 1c according to the second embodiment switches the port of each switch of the switch unit 20c to a port that enables return communication in a case of communication between subscriber devices within the same ROADM (within the host base). Also, the optical communication device 1c according to the second embodiment performs switching of the port of each switch of the switch unit 20c on the basis of whether or not reproduction relay is needed in a case of communication between the subscriber device at the host base and the subscriber device at another base.

Also, the optical communication device 1c according to the second embodiment of the present invention implements return communication between the subscriber devices within the host base and communication between the subscriber device within the host base and the subscriber device at another base by using not only the switch unit 20c but also the signal multiplexing/separating unit 30c, unlike the aforementioned optical communication device 1c according to the second embodiment.

With such a configuration, the optical communication device 1c according to the second embodiment of the present invention can reduce an increase in device cost and communication delay in communication both within the same base and between different bases.

In this manner, the optical communication device 1c according to the second embodiment has a configuration in which electrical processing performed by the electrical processing unit 80c (for example, processing for reproduction relay performed by the transponder) is performed as needed instead of a configuration in which the processing is essential, in communication within the same base and communication between different bases. The optical communication device 1c according to the second embodiment can omit execution of the electrical processing when the electrical processing is not needed and can thereby reduce an increase in communication delay, by including such a configuration.

### <Third Embodiment>

Hereinafter, a configuration of an optical communication device 1d(an optical communication apparatus) according to a third embodiment of the present invention will be described.

### [Configuration of Optical communication device]

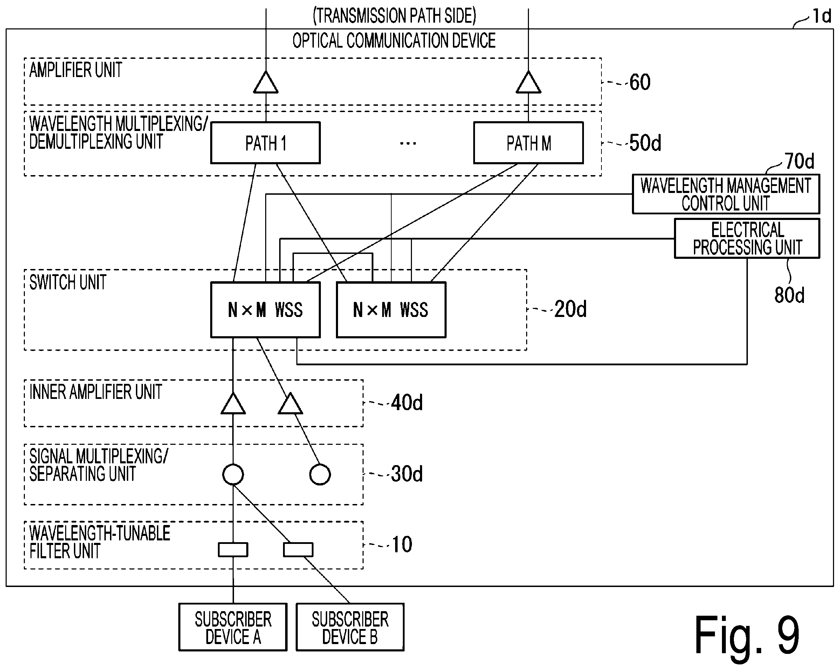

Fig. 9 is an overall configuration diagram of the optical communication device 1d according to the third embodiment of the present invention.

The optical communication device 1d according to the third embodiment of the present invention is a device utilizing ROADM having a configuration that is different from that of the aforementioned optical communication device 1 according to the first embodiment and the aforementioned optical communication device 1c according to the second embodiment. As illustrated in Fig. 9, the optical communication device 1d according to the third embodiment is configured to include an amplifier unit 60, a wavelength multiplexing/demultiplexing unit 50d, an inner amplifier unit 40d, a signal multiplexing/separating unit 30d, a switch unit 20d, wavelength-tunable filter units 10, a wavelength management control unit 70d, and an electrical processing unit 80d.

A configuration of each functional unit of the optical communication device 1d according to the third embodiment in uplink communication is as follows.

The wavelength-tunable filter unit 10 receives a signal transmitted from a subscriber device. The wavelength-tunable filter units 10 output the received signal switch a predetermined wavelength to the signal multiplexing/separating unit 30d.

The signal multiplexing/separating unit 30d is configured to include a plurality of couplers. The plurality of couplers of the signal multiplexing/separating unit 30d receive inputs of the signal transferred from each of the plurality of wavelength-tunable filters of the wavelength-tunable filter units 10. The plurality of couplers of the signal multiplexing/separating unit 30d multiplex the signal input from each of the plurality of wavelength-tunable filter units 10. The signal multiplexing/separating unit 30d outputs the multiplexed signals to the inner amplifier unit 40d.

The inner amplifier unit 40d receives inputs of the signals output from the signal multiplexing/separating unit 30d. In order to compensate for a loss caused in signal multiplexing performed by the signal multiplexing/separating unit 30d, the inner amplifier unit 40d amplifies signal power. The inner amplifier unit 40d outputs the amplified signals to the switch unit 20d.

The switch unit 20d receives inputs of the signals output from the inner amplifier unit 40d. The switch unit 20 is configured to include at least one switch. The switch is a switch with N × M (N and M are arbitrary natural numbers) inputs and outputs.

Each switch of the switch unit 20d transfers the input signal to a desired path. The desired path described here is a desired path of the wavelength multiplexing/demultiplexing unit 50d, a path to the wavelength management control unit 70d, a path to the electrical processing unit 80d, or a path to another switch that is a path to the subscriber device as a destination of return communication.

The wavelength multiplexing/demultiplexing unit 50d receives an input of the signal transferred from each of the plurality of switches of the switch unit 20d. The wavelength multiplexing/demultiplexing unit 50d multiplexes the plurality of input signals. The wavelength multiplexing/demultiplexing unit 50d outputs the multiplexed signals to the amplifier unit 60.

The amplifier unit 60 receives inputs of the signals output from the wavelength multiplexing/demultiplexing unit 50d. The amplifier unit 60 amplifies the input signals. The amplifier unit 60 outputs the amplified signals to the transmission path side.

The configuration of each functional unit of the optical communication device 1 according to the first embodiment in downlink communication is as follows.

The amplifier unit 60 receives an input of a signal arriving from the transmission path side. The amplifier unit 60 amplifies the input signals. The amplifier unit 60 outputs the amplified signals to the wavelength multiplexing/demultiplexing unit 50d.

The wavelength multiplexing/demultiplexing unit 50d receives inputs of the signals output from the amplifier unit 60. The wavelength multiplexing/demultiplexing unit 50d demultiplexes the input signals. The wavelength multiplexing/demultiplexing unit 50d outputs the demultiplexed signals to all the switches of the switch unit 20d.

Each switch of the switch unit 20d receives inputs of the signals output from the wavelength multiplexing/demultiplexing unit 50d. In order to receive a desired signal, each switch of the switch unit 20d switches the wavelength multiplexing/demultiplexing unit 50d as a connection destination by switching ports. Each switch of the switch unit 20d outputs the input signal directly to the inner amplifier unit 40d, or to the inner amplifier unit 40d via the electrical processing unit 80 and the switch in the next stage.

The inner amplifier unit 40d receives an input of the signal output from the wavelength multiplexing/demultiplexing unit 50d. The inner amplifier unit 40d amplifies the input signals. The inner amplifier unit 40d outputs the amplified signals to the signal multiplexing/separating unit 30d.

The Signal multiplexing/separating unit 30d receives inputs of the signals output from the inner amplifier unit 40d. The signal multiplexing/separating unit 30d distributes the input signals. The signal multiplexing/separating unit 30d transmits the distributed signals to the subscriber device via the wavelength-tunable filter unit 10.

The configuration of each functional unit other than the switch unit 20d in the configuration of the optical communication device 1d according to the third embodiment is basically similar to the configuration thereof in the aforementioned optical communication device 1 according to the first embodiment and the aforementioned optical communication device 1c according to the second embodiment. Also, the optical communication device 1d according to the third embodiment includes the signal multiplexing/separating unit 30d and the inner amplifier unit 40d for the purpose of increasing the number of subscriber devices that can be accommodated. However, the signal multiplexing/separating unit 30d and the inner amplifier unit 40d are not essential in the configuration of the optical communication device 1d according to the third embodiment, and a configuration in which a signal from the subscriber device directly arrives at the switch unit 20d, for example, may be adopted.

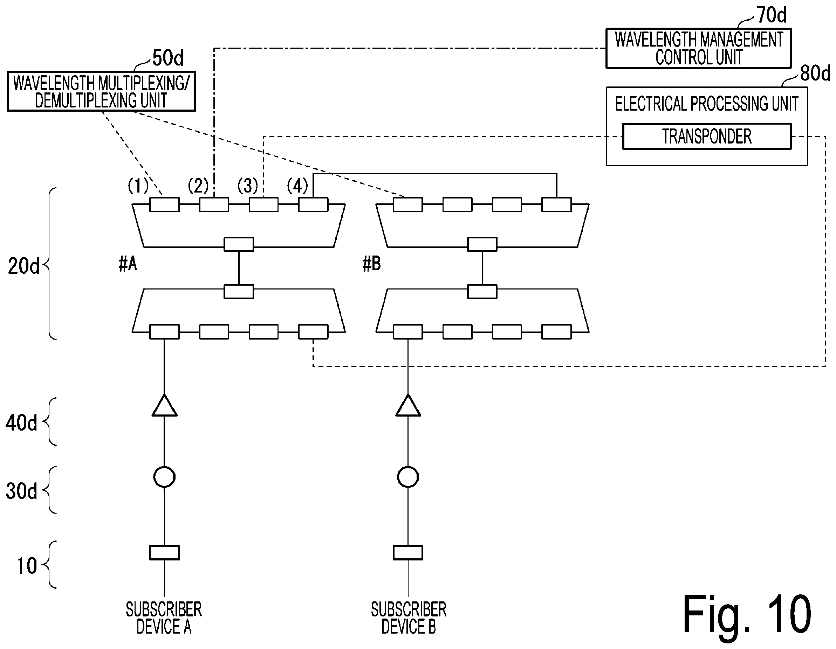

In the optical communication device 1d according to the third embodiment, the switch unit 20d is configured by a WSS having a configuration with N × M (N and M are arbitrary natural numbers) inputs and outputs, unlike the aforementioned optical communication device 1 according to the first embodiment and the aforementioned optical communication device 1c according to the second embodiment. However, it is difficult to realize the WSS having a configuration with a large number of ports and with N × M inputs and outputs. Therefore, a WSS that has a configuration with N × M inputs and outputs is generally configured in a pseudo manner by using a WSS having a configuration with 1 × N inputs and outputs and a WSS having a configuration with 1 × M inputs and outputs as illustrated in Fig. 10.

Although three functions called colorless, directionless, and contentionless (CDC) of the ROADM are realized in a case of the WSS having a configuration with N × M inputs and outputs, the function of contentionless is not realized, and only the functions of colorless and directionless are realized in the case where the WSS having a configuration with N × M inputs and outputs is configured in a pseudo manner by using the WSS having a configuration with 1 × N inputs and outputs and the WSS having a configuration with 1 × M inputs and outputs.

Hereinafter, a flow of a signal will be described with reference to Fig. 10. Fig. 10 is a diagram for explaining details of switching processing performed by the switch unit 20d of the optical communication device 1d according to the third embodiment of the present invention.

In order for the subscriber device A to communicate with the subscriber device B that is present at the same base, the port of the switch #A in which the input/output on the wavelength multiplexing/demultiplexing unit 50d side is a WSS having the configuration of N × M is switched to (4).

On the other hand, in a case where the subscriber device A connects to a subscriber device C (not illustrated) that is present at a different base, the port of the switch #A is switched to (1) or (3). Specifically, in a case where the distance between the subscriber device A and the subscriber device C (not illustrated) is short and the reproduction relay is not needed, for example, the port of the switch #A is switched to (1). Conversely, in a case where the distance between the subscriber device A and the subscriber device C (not illustrated) is long, and reproduction relay is needed, for example, the port of the switch #A is switched to (3), and the signal is subjected to the electrical processing for reproduction relay and is then transferred to a path from the switch #A to the subscriber device C (not illustrated).

In the aforementioned optical communication device 1 according to the first embodiment illustrated in Fig. 2 and the aforementioned optical communication device 1c according to the second embodiment illustrated in Fig. 5, the switches having configurations with 1 × M inputs and outputs are used, and it is thus necessary to establish further connection to another switch (the switch #1 in Figs. 2 and 5) in a case where each switch is connected to (3) the port.

On the other hand, the switches of the optical communication device 1d according to the third embodiment have a plurality of (N) ports on the subscriber device side as well as illustrated in Fig. 10, and it is thus possible to accommodate the signal after being subjected to the electrical processing by the electrical processing unit 80d again by the same switch #A. Thus, there is no need to separately provide a switch for the electrical processing in the optical communication device 1d according to the third embodiment. In this manner, an increase in device cost may be reduced. However, since the function of contentionless is not included in this case, it is necessary to change the wavelength when a signal is transmitted from the subscriber device to the electrical processing unit 80d and the wavelength when a signal is transmitted from the electrical processing unit 80d to the wavelength multiplexing/demultiplexing unit 50d.

Also, the optical communication device 1d according to the third embodiment has a configuration in which electrical processing performed by the electrical processing unit 80d (for example, processing for reproduction relay performed by the transponder) is performed as needed instead of a configuration in which the processing is essential, in communication within the same base and communication between different bases. The optical communication device 1d according to the third embodiment can omit execution of the electrical processing when the electrical processing is not needed and can thereby reduce an increase in communication delay, by including such a configuration.

Note that the optical communication device 1d according to the third embodiment may be configured such that only one port is added to each of the switch #A and the switch #B (to the conventional technology) and the added port is further connected to yet another switch (the switch #A' and the switch #B' in Fig. 5), like the configuration of the aforementioned optical communication device 1b according to the second modification example of the first embodiment illustrated in Fig. 5.

Then, these other switches (the switch #A' and the switch #B') may select a coupler connected to the wavelength management control unit 70d, a coupler connected to the electrical processing unit 80d, or a coupler connected to the return destination (from the switch #A' to the switch #B' or from the switch #B' to the switch #A') according to this configuration.

### [Operations of Optical Communication Device]

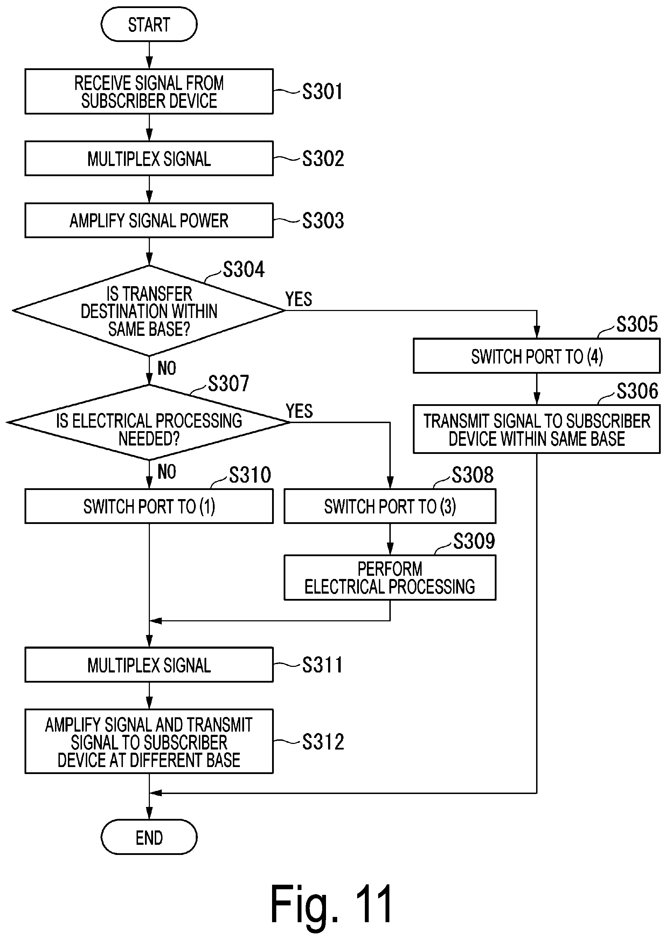

Hereinafter, operations of the optical communication device 1d according to the third embodiment will be described. Hereinafter, operations of the optical communication device 1d in uplink communication will be described as an example. Fig. 11 is a flowchart illustrating an operation of the optical communication device 1d according to the third embodiment of the present invention.

First, the wavelength-tunable filter unit 10 receives a signal transmitted from the subscriber device A illustrated in Fig. 1, for example (Step S301). The wavelength-tunable filter units 10 output the received signal switch a predetermined wavelength to the signal multiplexing/separating unit 30d.

Next, the signal multiplexing/separating unit 30d receives an input of the signal output from the wavelength-tunable filter unit 10. The signal multiplexing/separating unit 30d multiplexes the input signal and another signal output from the wavelength-tunable filter unit 10 (Step S302). The signal multiplexing/separating unit 30d outputs the multiplexed signals to the inner amplifier unit 40d.

Next, the inner amplifier unit 40d receives inputs of the signals output from the signal multiplexing/separating unit 30d. The inner amplifier unit 40d amplifies signal power in order to compensate for a loss caused in signal multiplexing performed by the signal multiplexing/separating unit 30d (Step S303). The inner amplifier unit 40d outputs the amplified signals to the switch unit 20d.

Next, the switch unit 20d receives inputs of the signals output from the inner amplifier unit 40d. Each switch of the switch unit 20d transfers the input signal to a desired path. Here, the switch unit 20d switches the port of the switch #A illustrated in Fig. 10 to (4) (Step S305) if the input signal is a signal to be transferred to the subscriber device B illustrated in Fig. 9, for example, that is present at the same base (Step S304; YES). In this manner, the signal is output to the switch #B illustrated in Fig. 10.

The switch #B of the switch unit 20d receives an input of the signal output from the switch #A. The switch #B transmits the input signal to the subscriber device B that is present at the same base (Step S306). The operations of the optical communication device 1d illustrated by the flowchart in Fig. 11 end in this manner.

On the other hand, if the input signal is a signal to be transferred to the subscriber device C (not illustrated) that is present at a different base (Step S304; NO), and the distance between the subscriber device A and the subscriber device C (not illustrated) is equal to or greater than a predetermined distance (in other words, the distance requiring electrical processing for reproduction relay) (Step S307; YES), the switch unit 20d switches the port of the switch #A illustrated in Fig. 10 to (3) (Step S308).

In this manner, the signal is output to the electrical processing unit 80d. The electrical processing unit 80d performs electrical processing for reproduction relay on the input signal (Step S309). The signal after being subjected to the electrical processing is output to the wavelength multiplexing/demultiplexing unit 50d via the switch #A of the switch unit 20d illustrated in Fig. 10 again.

On the other hand, if the input signal is a signal to be transferred to the subscriber device C (not illustrated) that is present at a different base (Step S304; NO), and the distance between the subscriber device A and the subscriber device C (not illustrated) is a distance (in other words, the distance that does not require electrical processing for reproduction relay) that is shorter than the predetermined distance (Step S307; NO), the switch unit 20d switches the port of the switch #A illustrated in Fig. 10 to (1) (Step S310). In this manner, the signal is output to the wavelength multiplexing/demultiplexing unit 50d.

Next, the wavelength multiplexing/demultiplexing unit 50d receives an input of the signal output from the switch unit 20d. The wavelength multiplexing/demultiplexing unit 50d multiplexes the input signal with other signals output from the switch unit 20d (Step S311). The wavelength multiplexing/demultiplexing unit 50d outputs the multiplexed signals to the amplifier unit 60.

Next, the amplifier unit 60 receives inputs of the signals output from the wavelength multiplexing/demultiplexing unit 50d. The amplifier unit 60 amplifies the input signals. The amplifier unit 60 outputs the amplified signals to the subscriber device (for example, the subscriber device C, which is not illustrated) at a different base via the transmission path (Step S312). The operations of the optical communication device 1d illustrated by the flowchart in Fig. 11 end in this manner.

As described above, the optical communication device 1d according to the third embodiment of the present invention can perform return communication. The optical communication device 1d according to the third embodiment uses an ROADM device configuration which is different from those of the first embodiment and the second embodiment described above, for example, and can perform communication that does not require electrical processing performed by the transponder as an essential matter.

Specifically, the optical communication device 1d according to the third embodiment switches the port of each switch of the switch unit 20d to a port that enables return communication in a case of communication between subscriber devices within the same ROADM (within the host base). Also, the optical communication device 1d according to the third embodiment performs switching of the port of each switch of the switch unit 20d on the basis of whether or not reproduction relay is needed in a case of communication between the subscriber device at the host base and the subscriber device at another base.

In the optical communication device 1d according to the third embodiment of the present invention, the switch unit 20d is configured by a WSS having a configuration with N × M inputs and outputs, unlike the aforementioned optical communication device 1 according to the first embodiment and the aforementioned optical communication device 1c according to the second embodiment. The switches of the optical communication device 1d according to the third embodiment thus have N ports on the subscriber device side, and the signal after being subjected to the electrical processing can be accommodated by the same switch again.

With such a configuration, the optical communication device 1c according to the third embodiment of the present invention can reduce an increase in device cost and communication delay in communication both within the same base and between different bases.

According to the aforementioned embodiments, the optical communication device includes a connection switching unit and a control unit. For example, the optical communication device is the optical communication device 1, 1a, 1b, 1d according to the embodiments, the connection switching unit is the switch unit 20, 20a, 20b, 20d in the embodiments, and the control unit is the wavelength management control unit 70, 70d in the embodiments.

In the above optical communication device, the connection switching unit connects a first communication port connected to a first communication device belonging to a host base to a second communication port connected to a second communication device belonging to the host base, a third communication port connected to a third communication device belonging to another base, and a fourth communication port connected to an electrical processing unit that performs electrical processing for reproduction relay on a signal transmitted to a fourth communication device belonging to the other base.

For example, the first communication device is the subscriber device A in the embodiments, the first communication port is the port of the switch #A on the subscriber device side in the embodiments, the second communication device is the subscriber device B in the embodiments, the second communication port is (4) the port in the embodiments, the third communication device and the fourth communication device are the subscriber device C that is present at a different base and is not illustrated in the embodiments, the third communication port is (1) the port in the embodiments, the electrical processing unit is the electrical processing unit 80, 80d in the embodiments, and the fourth communication port is (3) the port in the embodiments.

Also, the control unit controls switching of connection of the communication ports performed by the connection switching unit on the basis of the base to which the communication device communicating with the first communication device belongs and whether or not the electrical processing is needed in the above communication device.

Note that the above optical communication device may further include a signal multiplexing/separating unit and an inner amplification unit. In this case, for example, the optical communication device is the optical communication device 1, 1b, 1d in the embodiments, the signal multiplexing/separating unit is the signal multiplexing/separating unit 30, 30b, 30d in the embodiments, and the inner amplification unit is the inner amplifier unit 40, 40d in the embodiments. In this case, the signal multiplexing/separating unit multiplexes a signal output from each of the plurality of connection switching units. For example, the plurality of connection switching units are a plurality of switches included in the switch unit 20, 20b, 20d in the embodiment. In this case, the inner amplification unit amplifies the signals multiplexed by the signal multiplexing/separating unit and compensates for a loss of signals due to the multiplexing.

According to the aforementioned embodiments, the optical communication device includes connection switching units, a signal multiplexing/separating unit, and a control unit. For example, the optical communication device is the optical communication device 1c according to the embodiment, the connection switching units are the switch unit 20c in the embodiment, the signal multiplexing/separating unit is the signal multiplexing/separating unit 30c in the embodiment, and the control unit is the wavelength management control unit 70c in the embodiment.

In the above optical communication device, the plurality of connection switching units connect a first communication port to a second communication port, a third communication port, or a fourth communication port. For example, the plurality of connection switching units are the plurality of switches included in the switch unit 20c in the embodiment, the first communication port is the port of the switch #A on the subscriber device side in the embodiment, the second communication port is (4) the port in the embodiment, the third communication port is (1) the port in the embodiment, and the fourth communication port is (3) the port in the embodiment.

In the above optical communication device, the signal multiplexing/separating unit multiplexes a signal output from each of the plurality of connection switching units, connects the first communication port to a first communication device belonging to the host base, connects the second communication port to a second communication device belonging to the host base, connects the third communication port to a third communication device belonging to another base, and connects the fourth communication port to an electrical processing unit that performs electrical processing for reproduction relay on a signal transmitted to a fourth communication device belonging to the other base. For example, the first communication device is the subscriber device A in the embodiment, the second communication device is the subscriber device B in the embodiment, the third communication device and the fourth communication device are the subscriber device C that is present at a different base and is not illustrated in the embodiment, the third communication port is (1) the port in the embodiment, and the electrical processing unit is the electrical processing unit 80c in the embodiment.

Also, the control unit controls switching of connection of the communication ports performed by the connection switching unit on the basis of the base to which the communication device communicating with the first communication device belongs and whether or not the electrical processing is needed in the above optical communication device.

Note that in the above optical communication device, the connection switching unit may include a wavelength selection switch. In this case, the optical communication device is the optical communication device 1, 1a, 1b, 1c in the embodiments, the connection switching unit is the switch unit 20, 20a, 20b, 20c in the embodiments, for example. In this case, the wavelength selection switch connects the first communication port to any one of the second communication port, the third communication port, and the fourth communication port.

Note that in the above optical communication device, the connection switching unit may include a wavelength selection switch. In this case, the optical communication device is the optical communication device 1d in the embodiment, the connection switching unit is the switch unit 20d in the embodiment, and the wavelength selection switch is the switch #A of the switch unit 20d in the embodiment, for example. In this case, the wavelength selection switch selects one of N (N is an arbitrary natural number) communication ports and one of M (M is an arbitrary natural number) communication ports and establishes connection between the selected ports.

In this case, the first communication port is one of the N communication ports, and each of the second communication port, the third communication port, and the fourth communication port is one of the M communication ports. For example, the first communication port is the port of the switch #A on the subscriber device side that the switch unit 20d has in the embodiment, the second communication port is (4) the port that the switch unit 20d has in the embodiment, the third communication port is (1) the port that the switch unit 20d has in the embodiment, and the fourth communication port is (3) the port that the switch unit 20d has in the embodiment.

A part of the optical communication device 1, 1a to 1d in each of the embodiments described above may be implemented by a computer. In that case, a program for realizing this function may be recorded in a computer-readable recording medium, and the program recorded in the recording medium may be read and executed by a computer system to realize this function. Note that the "computer system" mentioned herein includes an OS and hardware such as peripheral devices. Also, the "computer-readable recording medium" is a portable medium such as a flexible disk, a magneto-optical disc, a ROM, or a CD-ROM, or a storage device such as a hard disk embedded in the computer system. Further, the "computer-readable recording medium" may include a medium that dynamically holds the program for a short time, such as a communication line in a case where the program is transmitted via a network such as the Internet or a communication line such as a telephone line, and a medium that holds the program for a certain period of time, such as a volatile memory inside a computer system serving as a server or a client in that case. Also, the foregoing program may be for implementing some of the functions described above, may be implemented in a combination of the functions described above and a program already recorded in a computer system, or may be implemented with a programmable logic device such as a field programmable gate array (FPGA).

Although the embodiments of the present invention have been described in detail with reference to the drawings, the specific configuration is not limited to the embodiment, and includes design and the like within the scope of the appended claims.

### Reference Signs List

1, 1a, 1b, 1c, 1d Optical communication device(Optical communication apparatus)
10 Wavelength-tunable filter unit
20, 20b, 20c, 20d Switch unit
30, 30c, 30d Signal multiplexing/separating unit
40, 40d Inner amplifier unit
50, 50d Wavelength multiplexing/demultiplexing unit
60 Amplifier unit
70, 70b, 70c, 70d Wavelength management control unit
80, 80b, 80c, 80d Electrical processing unit

## Claims

1. An optical communication device comprising:
a plurality of connection switching units (20, 20a, 20b, 20d) configured to connect a first communication port connected to a first communication device (A) under control of a host base, which is a device that operates a transmission network, to a second communication port (4) connected to a second communication device (B) under control of the host base, a third communication port (1) connected to a third communication device (C) under control of another base, and a fourth communication port (3) connected to an electrical processing unit (80, 80d) that performs electrical processing for reproduction relay on a signal transmitted to a fourth communication device (C) under control of the other base; and
a control unit (70, 70d) configured to control switching of connection to the communication ports performed by each of the connection switching units on the basis of the base to which a communication device communicating with the first communication device (A) belongs and whether or not the electrical processing is needed,
**characterized in that** the control unit (70, 70a) is configured to:
connect the first communication port to the second communication port (4) in case where a communication device which communicate with the first communication device (A) is under control of the host base;
connect the first communication port to the third communication port (1) in case where a communication device which communicate with the first communication device (A) is under control of a base different to the host base and the electrical processing for reproduction relay is not needed; and
connect the first communication port to the fourth communication port (3) in case where a communication device which communicate with the first communication device (A) is under control of a base different to the host base and the electrical processing for reproduction relay is needed.

2. The optical communication device according to claim 1, further comprising:
a signal multiplexing/separating unit (30) configured to multiplex a signal output from each of the plurality of the connection switching units; and
an inner amplification unit (40) configured to amplify the signal multiplexed by the signal multiplexing/separating unit and compensates for a loss of the signal caused by the multiplexing.

3. An optical communication device comprising:
a plurality of connection switching units (20c) configured to connect a first communication port to a second communication port (40), a third communication port (1), and a fourth communication port (3);
a signal multiplexing/separating unit (30c) configured to multiplex a signal output from each of the plurality of connection switching units, configured to connect the first communication port to a first communication device (A) under control of a host base, which is a device that operates a transmission network, configured to connect the second communication port (4) to a second communication device (B) under control of the host base, configured to connect the third communication port (1) to a third communication device (C) under control of another base, and configured to connect the fourth communication port (3) to an electrical processing unit (80c) through the signal multiplexing/separating unit (30c), the electrical processing unit (80c) performing electrical processing for reproduction relay on a signal transmitted to a fourth communication device (C) under control of the other base; and
a control unit (70c) configured to control switching of connection of the communication ports performed by the connection switching unit on the basis of the base to which the communication device communicating with the first communication device (A) belongs and whether or not the electrical processing is needed,
**characterized in that** the control unit (70c) is configured to:
connect the first communication port to the second communication port (4) in case where a communication device which communicate with the first communication device (A) is under control of the host base;
connect the first communication port to the third communication port (1) in case where a communication device which communicate with the first communication device (A) is under control of a base different to the host base and the electrical processing for reproduction relay is not needed; and
connect the first communication port to the fourth communication port (3) in case where a communication device which communicate with the first communication device (A) is under control of a base different to the host base and the electrical processing for reproduction relay is needed.

4. The optical communication device according to any one of claims 1 to 3, wherein
the connection switching unit (20c) includes a wavelength selection switch (WSS) configured to connect the first communication port to any one of the second communication port, the third communication port, and the fourth communication port.

5. The optical communication device according to claim 1 or 2, wherein
the connection switching unit has a wavelength selection switch (WSS) configured to select one of N (N is an arbitrary natural number) communication ports and one of M (M is an arbitrary natural number) communication ports and establishes connection between the selected ports, and
the first communication port is one of the N communication ports, and each of the second communication port, the third communication port, and the fourth communication port is one of the M communication ports.

6. An optical communication method comprising:
a connection switching step of connecting a first communication port connected to a first communication device (A) under control of a host base, which is a device that operates a transmission network, to a second communication port (4) connected to a second communication device (B) under control of the host base, a third communication port (1) connected to a third communication device (C) under control of another base, and a fourth communication port (3) connected to an electrical processing unit (80, 80d) that performs electrical processing for reproduction relay on a signal transmitted to a fourth communication device (C) under control of the other base; and
a control step of controlling switching of connection of the communication ports in the connection switching step on the basis of the base to which the communication device communicating with the first communication device (A) belongs and whether or not the electrical processing is needed,
**characterized in that** the control step includes:
connecting the first communication port to the second communication port (4) in case where a communication device which communicate with the first communication device (A) is under control of the host base;
connecting the first communication port to the third communication port (1) in case where a communication device which communicate with the first communication device (A) is under control of a base different to the host base and the electrical processing for reproduction relay is not needed; and
connecting the first communication port to the fourth communication port (3) in case where a communication device which communicate with the first communication device (A) is under control of a base different to the host base and the electrical processing for reproduction relay is needed.

7. An optical communication method comprising:
a connection switching step of connecting, by a plurality of connection switching units (20c), a first communication port to a second communication port (4), a third communication port (1), and a fourth communication port (3);
a signal multiplexing/separating step of multiplexing a signal output from each of the plurality of connection switching units, connecting the first communication port to a first communication device (A) under control of a host base, which is a device that operates a transmission network, connecting the second communication port (4) to a second communication device (B) under control of the host base, connecting the third communication port (1) to a third communication device (C) under control of another base, and connecting the fourth communication port (3) to an electrical processing unit (80c) through a signal multiplexing/separating unit (70c), the electrical processing unit (80c) performing electrical processing for reproduction relay on a signal transmitted to a fourth communication device (C) under control of the other base; and
a control step of controlling switching of connection of the communication ports in the connection switching step on the basis of the base to which the communication device communicating with the first communication device belongs and whether or not the electrical processing is needed,
**characterized in that** the control step includes:
connecting the first communication port to the second communication port (4) in case where a communication device which communicate with the first communication device (A) is under control of the host base;
connecting the first communication port to the third communication port (1) in case where a communication device which communicate with the first communication device (A) is under control of a base different to the host base and the electrical processing for reproduction relay is not needed; and
connecting the first communication port to the fourth communication port (3) in case where a communication device which communicate with the first communication device (A) is under control of a base different to the host base and the electrical processing for reproduction relay is needed.

8. The optical communication method according to claim 6, wherein
in the connection switching step, one of N (N is an arbitrary natural number) communication ports and one of M (M is an arbitrary natural number) communication ports are selected, and connection is established between the selected ports, and
the first communication port is one of the N communication ports, and each of the second communication port, the third communication port, and the fourth communication port is one of the M communication ports.

## Patentansprüche

1. Optische Kommunikationsvorrichtung, umfassend:
eine Vielzahl von Verbindungsumschalteinheiten (20, 20a, 20b, 20d), die konfiguriert sind, um einen ersten Kommunikationsanschluss, der mit einer ersten Kommunikationsvorrichtung (A) unter der Steuerung einer Host-Basis verbunden ist, die eine Vorrichtung ist, die ein Übertragungsnetz betreibt, mit einem zweiten Kommunikationsanschluss (4), der mit einer zweiten Kommunikationsvorrichtung (B) unter der Steuerung der Host-Basis verbunden ist, einem dritten Kommunikationsanschluss (1), der mit einer dritten Kommunikationsvorrichtung (C) unter der Steuerung einer anderen Basis verbunden ist, und einem vierten Kommunikationsanschluss (3) zu verbinden, der mit einer elektrischen Verarbeitungseinheit (80, 80d) verbunden ist, die eine elektrische Verarbeitung zur Wiedergabeweiterleitung an einem Signal durchführt, das an eine vierte Kommunikationsvorrichtung (C) unter der Steuerung der anderen Basis übertragen wird; und
eine Steuereinheit (70, 70d), die konfiguriert ist, um das Umschalten einer Verbindung auf die Kommunikationsanschlüsse zu steuern, das von jeder der Verbindungsumschalteinheiten auf der Grundlage der Basis, der eine mit der ersten Kommunikationsvorrichtung (A) kommunizierende Kommunikationsvorrichtung angehört, und ob eine elektrische Verarbeitung erforderlich ist oder nicht, durchgeführt wird,
**dadurch gekennzeichnet, dass** die Steuereinheit (70, 70a) konfiguriert ist, um:
den ersten Kommunikationsanschluss mit dem zweiten Kommunikationsanschluss (4) in einem Fall zu verbinden, in dem eine Kommunikationsvorrichtung, die mit der ersten Kommunikationsvorrichtung (A) kommuniziert, unter der Steuerung der Host-Basis steht;
den ersten Kommunikationsanschluss mit dem dritten Kommunikationsanschluss (1) in einem Fall zu verbinden, in dem eine Kommunikationsvorrichtung, die mit der ersten Kommunikationsvorrichtung (A) kommuniziert, unter der Steuerung einer anderen Basis als der Host-Basis steht und die elektrische Verarbeitung zur Wiedergabeweiterleitung nicht erforderlich ist; und
den ersten Kommunikationsanschluss mit dem vierten Kommunikationsanschluss (3) in einem Fall zu verbinden, in dem eine Kommunikationsvorrichtung, die mit der ersten Kommunikationsvorrichtung (A) kommuniziert, unter der Steuerung einer anderen Basis als der Host-Basis steht und die elektrische Verarbeitung zur Wiedergabeweiterleitung erforderlich ist.

2. Optische Kommunikationsvorrichtung nach Anspruch 1, weiter umfassend:
eine Signal-Multiplexing-/Trennungseinheit (30), die konfiguriert ist, um ein von jeder der Vielzahl der Verbindungsumschalteinheiten ausgegebenes Signal zu multiplexen; und
eine innere Verstärkungseinheit (40), die konfiguriert ist, um das von der Signal-Multiplexing-/Trennungseinheit gemultiplexte Signal zu verstärken und einen durch das Multiplexing verursachten Signalverlust auszugleichen.

3. Optische Kommunikationsvorrichtung, umfassend:
eine Vielzahl von Verbindungsumschalteinheiten (20c), die konfiguriert sind, um einen ersten Kommunikationsanschluss mit einem zweiten Kommunikationsanschluss (40), einem dritten Kommunikationsanschluss (1) und einem vierten Kommunikationsanschluss (3) zu verbinden;
eine Signal-Multiplexing-/Trennungseinheit (30c), die konfiguriert ist, um ein Signal, das von jeder der Vielzahl von Verbindungsumschalteinheiten ausgegeben wird, zu multiplexen, konfiguriert ist, um den ersten Kommunikationsanschluss unter der Steuerung einer Host-Basis, die eine Vorrichtung ist, die ein Übertragungsnetz betreibt, mit einer ersten Kommunikationsvorrichtung (A) zu verbinden, konfiguriert ist, um den zweiten Kommunikationsanschluss (4) unter der Steuerung der Host-Basis mit einer zweiten Kommunikationsvorrichtung (B) zu verbinden, konfiguriert ist, um den dritten Kommunikationsanschluss (1) unter der Steuerung einer anderen Basis mit einer dritten Kommunikationsvorrichtung (C) zu verbinden, und konfiguriert ist, um den vierten Kommunikationsanschluss (3) über die Signal-Multiplexing-/Trennungseinheit (30c) mit einer elektrischen Verarbeitungseinheit (80c) zu verbinden, wobei die elektrische Verarbeitungseinheit (80c) eine elektrische Verarbeitung zur Wiedergabeweiterleitung an einem Signal durchführt, das an eine vierte Kommunikationsvorrichtung (C) unter der Steuerung der anderen Basis übertragen wird; und
eine Steuereinheit (70c), die konfiguriert ist, um Umschalten einer Verbindung der Kommunikationsanschlüsse zu steuern, das von der Verbindungsumschalteinheit auf der Grundlage der Basis, der die mit der ersten Kommunikationsvorrichtung (A) kommunizierende Kommunikationsvorrichtung angehört, und ob eine elektrische Verarbeitung erforderlich ist oder nicht, durchgeführt wird,
**dadurch gekennzeichnet, dass** die Steuereinheit (70c) konfiguriert ist, um:
den ersten Kommunikationsanschluss mit dem zweiten Kommunikationsanschluss (4) in einem Fall zu verbinden, in dem eine Kommunikationsvorrichtung, die mit der ersten Kommunikationsvorrichtung (A) kommuniziert, unter der Steuerung der Host-Basis steht;
den ersten Kommunikationsanschluss mit dem dritten Kommunikationsanschluss (1) in einem Fall zu verbinden, in dem eine Kommunikationsvorrichtung, die mit der ersten Kommunikationsvorrichtung (A) kommuniziert, unter der Steuerung einer anderen Basis als der Host-Basis steht und die elektrische Verarbeitung zur Wiedergabeweiterleitung nicht erforderlich ist; und
den ersten Kommunikationsanschluss mit dem vierten Kommunikationsanschluss (3) in einem Fall zu verbinden, in dem eine Kommunikationsvorrichtung, die mit der ersten Kommunikationsvorrichtung (A) kommuniziert, unter der Steuerung einer anderen Basis als der Host-Basis steht und die elektrische Verarbeitung zur Wiedergabeweiterleitung erforderlich ist.

4. Optische Kommunikationsvorrichtung nach einem der Ansprüche 1 bis 3, wobei
die Verbindungsumschalteinheit (20c) einen Wellenlängenauswahlschalter (WSS) beinhaltet, der konfiguriert ist, um den ersten Kommunikationsanschluss mit einem vom zweiten Kommunikationsanschluss, dem dritten Kommunikationsanschluss und vierten Kommunikationsanschlüsse zu verbinden.

5. Optische Kommunikationsvorrichtung nach Anspruch 1 oder 2, wobei die Verbindungsumschalteinheit einen Wellenlängenauswahlschalter (WSS) aufweist, der konfiguriert ist, um einen von N (N ist eine beliebige natürliche Zahl) Kommunikationsanschlüssen und einen von M (M ist eine beliebige natürliche Zahl) Kommunikationsanschlüssen auszuwählen, und eine Verbindung zwischen den ausgewählten Ports aufbaut, und
der erste Kommunikationsanschluss einer der N Kommunikationsanschlüsse ist, und jeder von dem zweiten Kommunikationsanschluss, dem dritten Kommunikationsanschluss und dem vierten Kommunikationsanschluss einer der M Kommunikationsanschlüsse ist.

6. Optisches Kommunikationsverfahren, umfassend:
einen Verbindungsumschaltschritt zum Verbinden eines ersten Kommunikationsanschlusses, der mit einer ersten Kommunikationsvorrichtung (A) unter der Steuerung einer Host-Basis verbunden ist, die eine Vorrichtung ist, die ein Übertragungsnetz betreibt, mit einem zweiten Kommunikationsanschluss (4), der mit einer zweiten Kommunikationsvorrichtung (B) unter der Steuerung der Host-Basis verbunden ist, einem dritten Kommunikationsanschluss (1), der mit einer dritten Kommunikationsvorrichtung (C) unter der Steuerung einer anderen Basis verbunden ist, und einem vierten Kommunikationsanschluss (3), der mit einer elektrischen Verarbeitungseinheit (80, 80d) verbunden ist, die eine elektrische Verarbeitung zur Wiedergabeweiterleitung an einem Signal durchführt, das an eine vierte Kommunikationsvorrichtung (C) unter der Steuerung der anderen Basis übertragen wird; und
ein Steuerungsschritt zum Steuern des Umschaltens der Verbindung der Kommunikationsanschlüsse im Verbindungsumschaltschritt auf der Grundlage der Basis, der die mit der ersten Kommunikationsvorrichtung (A) kommunizierende Kommunikationsvorrichtung angehört, und ob eine elektrische Verarbeitung erforderlich ist oder nicht,
**dadurch gekennzeichnet, dass** der Steuerungsschritt beinhaltet:
Verbinden des ersten Kommunikationsanschlusses mit dem zweiten Kommunikationsanschluss (4) in einem Fall, in dem eine Kommunikationsvorrichtung, die mit der ersten Kommunikationsvorrichtung (A) kommuniziert, unter der Steuerung der Host-Basis steht;
Verbinden des ersten Kommunikationsanschlusses mit dem dritten Kommunikationsanschluss (1) in einem Fall, in dem eine Kommunikationsvorrichtung, die mit der ersten Kommunikationsvorrichtung (A) kommuniziert, unter der Steuerung einer anderen Basis als der Host-Basis steht und die elektrische Verarbeitung für die Wiedergabeweiterleitung nicht erforderlich ist; und
Verbinden des ersten Kommunikationsanschlusses mit dem vierten Kommunikationsanschluss (3) in einem Fall, in dem eine Kommunikationsvorrichtung, die mit der ersten Kommunikationsvorrichtung (A) kommuniziert, unter der Steuerung einer anderen Basis als der Host-Basis steht und die elektrische Verarbeitung zur Wiedergabeweiterleitung erforderlich ist.

7. Optisches Kommunikationsverfahren, umfassend:
einen Verbindungsumschaltschritt zum Verbinden durch eine Vielzahl von Verbindungsumschalteinheiten (20c) eines ersten Kommunikationsanschlusses mit einem zweiten Kommunikationsanschluss (4), einem dritten Kommunikationsanschluss (1) und einem vierten Kommunikationsanschluss (3);
einen Signal-Multiplexing-/Trennungsschritt zum Multiplexen eines Signals, das von jeder der Vielzahl von Verbindungsumschalteinheiten ausgegeben wird, Verbinden des ersten Kommunikationsanschlusses unter der Steuerung einer Host-Basis, die eine Vorrichtung ist, die ein Übertragungsnetz betreibt, mit einer ersten Kommunikationsvorrichtung (A), Verbinden des zweiten Kommunikationsanschlusses (4) unter der Steuerung der Host-Basis mit einer zweiten Kommunikationsvorrichtung (B), Verbinden des dritten Kommunikationsanschlusses (1) unter der Steuerung einer anderen Basis mit einer dritten Kommunikationsvorrichtung (C) und Verbinden des vierten Kommunikationsanschlusses (3) über eine Signal-Multiplexing-/Trennungseinheit (70c) mit einer elektrischen Verarbeitungseinheit (80c), wobei die elektrische Verarbeitungseinheit (80c) eine elektrische Verarbeitung zur Wiedergabeweiterleitung an einem Signal durchführt, das an eine vierte Kommunikationsvorrichtung (C) unter der Steuerung der anderen Basis übertragen wird; und
einen Steuerungsschritt zum Steuern des Umschaltens der Verbindung der Kommunikationsanschlüsse im Verbindungsumschaltschritt auf der Grundlage der Basis, der die mit der ersten Kommunikationsvorrichtung kommunizierende Kommunikationsvorrichtung angehört, und ob eine elektrische Verarbeitung erforderlich ist oder nicht,
**dadurch gekennzeichnet, dass** der Steuerungsschritt beinhaltet:
Verbinden des ersten Kommunikationsanschlusses mit dem zweiten Kommunikationsanschluss (4) in einem Fall, in dem eine Kommunikationsvorrichtung, die mit der ersten Kommunikationsvorrichtung (A) kommuniziert, unter der Steuerung der Host-Basis steht;
Verbinden des ersten Kommunikationsanschlusses mit dem dritten Kommunikationsanschluss (1) in einem Fall, in dem eine Kommunikationsvorrichtung, die mit der ersten Kommunikationsvorrichtung (A) kommuniziert, unter der Steuerung einer anderen Basis als der Host-Basis steht und die elektrische Verarbeitung für die Wiedergabeweiterleitung nicht erforderlich ist; und
Verbinden des ersten Kommunikationsanschlusses mit dem vierten Kommunikationsanschluss (3) in einem Fall, in dem eine Kommunikationsvorrichtung, die mit der ersten Kommunikationsvorrichtung (A) kommuniziert, unter der Steuerung einer anderen Basis als der Host-Basis steht und die elektrische Verarbeitung zur Wiedergabeweiterleitung erforderlich ist.

8. Optisches Kommunikationsverfahren nach Anspruch 6, wobei
im Verbindungsumschaltschritt ein Kommunikationsanschluss von N (N ist eine beliebige natürliche Zahl) und ein Kommunikationsanschluss von M (M ist eine beliebige natürliche Zahl) ausgewählt wird, und zwischen den ausgewählten Anschlüssen eine Verbindung aufgebaut wird, und
der erste Kommunikationsanschluss einer der N Kommunikationsanschlüsse ist, und jeder von dem zweiten Kommunikationsanschluss, dem dritten Kommunikationsanschluss und dem vierten Kommunikationsanschluss einer der M Kommunikationsanschlüsse ist.

## Revendications

1. Dispositif de communication optique comportant :
une pluralité d'unités de commutation de connexion (20, 20a, 20b, 20d) configurées pour connecter un premier port de communication connecté à un premier dispositif de communication (A) sous la commande d'une base hôte, qui est un dispositif qui exploite un réseau de transmission, à un deuxième port de communication (4) connecté à un deuxième dispositif de communication (B) sous la commande de la base hôte, un troisième port de communication (1) connecté à un troisième dispositif de communication (C) sous la commande d'une autre base, et un quatrième port de communication (3) connecté à une unité de traitement électrique (80, 80d) qui effectue un traitement électrique pour un relais de reproduction sur un signal envoyé à un quatrième dispositif de communication (C) sous la commande de l'autre base ; et
une unité de commande (70, 70d) configurée pour commander la commutation de connexion aux ports de communication effectuée par chacune des unités de commutation de connexion en fonction de la base à laquelle appartient un dispositif de communication communiquant avec le premier dispositif de communication (A) et selon que le traitement électrique est nécessaire ou non,
**caractérisé en ce que** l'unité de commande (70, 70a) est configurée pour :
connecter le premier port de communication au deuxième port de communication (4) dans le cas où un dispositif de communication qui communique avec le premier dispositif de communication (A) est sous la commande de la base hôte ;
connecter le premier port de communication au troisième port de communication (1) dans le cas où un dispositif de communication qui communique avec le premier dispositif de communication (A) est sous la commande d'une base différente de la base hôte et le traitement électrique pour le relais de reproduction n'est pas nécessaire ; et
connecter le premier port de communication au quatrième port de communication (3) dans le cas où un dispositif de communication qui communique avec le premier dispositif de communication (A) est sous la commande d'une base différente de la base hôte et le traitement électrique pour le relais de reproduction est nécessaire.

2. Dispositif de communication optique selon la revendication 1, comportant en outre :
une unité de multiplexage/séparation de signal (30) configurée pour multiplexer une sortie de signal de chacune de la pluralité des unités de commutation de connexion ; et
une unité d'amplification interne (40) configurée pour amplifier le signal multiplexé par l'unité de multiplexage/séparation de signal et compense une perte du signal causée par le multiplexage.

3. Dispositif de communication optique comportant :
une pluralité d'unités de commutation de connexion (20c) configurées pour connecter un premier port de communication à un deuxième port de communication (40), un troisième port de communication (1) et un quatrième port de communication (3) ;
une unité de multiplexage/séparation de signal (30c) configurée pour multiplexer une sortie de signal de chacune de la pluralité d'unités de commutation de connexion, configurée pour connecter le premier port de communication à un premier dispositif de communication (A) sous la commande d'une base hôte, qui est un dispositif qui exploite un réseau de transmission, configurée pour connecter le deuxième port de communication (4) à un deuxième dispositif de communication (B) sous la commande de la base hôte, configurée pour connecter le troisième port de communication (1) à un troisième dispositif de communication (C) sous la commande d'une autre base, et configurée pour connecter le quatrième port de communication (3) à une unité de traitement électrique (80c) par l'intermédiaire de l'unité de multiplexage/séparation de signal (30c), l'unité de traitement électrique (80c) réalisant un traitement électrique pour un relais de reproduction sur un signal envoyé à un quatrième dispositif de communication (C) sous la commande de l'autre base ; et
une unité de commande (70c) configurée pour commander la commutation de connexion des ports de communication effectuée par l'unité de commutation de connexion en fonction de la base à laquelle appartient le dispositif de communication communiquant avec le premier dispositif de communication (A) et selon que le traitement électrique est nécessaire ou non,
**caractérisé en ce que** l'unité de commande (70c) est configurée pour :
connecter le premier port de communication au deuxième port de communication (4) dans le cas où un dispositif de communication qui communique avec le premier dispositif de communication (A) est sous la commande de la base hôte ;
connecter le premier port de communication au troisième port de communication (1) dans le cas où un dispositif de communication qui communique avec le premier dispositif de communication (A) est sous la commande d'une base différente de la base hôte et le traitement électrique pour le relais de reproduction n'est pas nécessaire ; et
connecter le premier port de communication au quatrième port de communication (3) dans le cas où un dispositif de communication qui communique avec le premier dispositif de communication (A) est sous la commande d'une base différente de la base hôte et le traitement électrique pour le relais de reproduction est nécessaire.

4. Dispositif de communication optique selon l'une quelconque des revendications 1 à 3, dans lequel
l'unité de commutation de connexion (20c) comporte un commutateur de sélection de longueur d'onde (WSS) configuré pour connecter le premier port de communication à l'un quelconque du deuxième port de communication, du troisième port de communication et du quatrième port de communication.

5. Dispositif de communication optique selon la revendication 1 ou 2, dans lequel
l'unité de commutation de connexion présente un commutateur de sélection de longueur d'onde (WSS) configuré pour sélectionner l'un parmi N (N est un nombre naturel arbitraire) ports de communication et l'un parmi M (M est un nombre naturel arbitraire) ports de communication et établit une connexion entre les ports sélectionnés, et
le premier port de communication est l'un des N ports de communication, et chacun du deuxième port de communication, du troisième port de communication, et du quatrième port de communication est l'un des M ports de communication.

6. Procédé de communication optique comportant :
une étape de commutation de connexion visant à connecter un premier port de communication connecté à un premier dispositif de communication (A) sous la commande d'une base hôte, qui est un dispositif qui exploite un réseau de transmission, à un deuxième port de communication (4) connecté à un deuxième dispositif de communication (B) sous la commande de la base hôte, un troisième port de communication (1) connecté à un troisième dispositif de communication (C) sous la commande d'une autre base, et un quatrième port de communication (3) connecté à une unité de traitement électrique (80, 80d) qui effectue un traitement électrique pour un relais de reproduction sur un signal envoyé à un quatrième dispositif de communication (C) sous la commande de l'autre base ; et
une étape de commande visant à commander la commutation de connexion des ports de communication à l'étape de commutation de connexion en fonction de la base à laquelle appartient le dispositif de communication communiquant avec le premier dispositif de communication (A) et selon que le traitement électrique est nécessaire ou non,
**caractérisé en ce que** l'étape de commande comporte :
la connexion du premier port de communication au deuxième port de communication (4) dans le cas où un dispositif de communication qui communique avec le premier dispositif de communication (A) est sous la commande de la base hôte ;
la connexion du premier port de communication au troisième port de communication (1) dans le cas où un dispositif de communication qui communique avec le premier dispositif de communication (A) est sous la commande d'une base différente de la base hôte et le traitement électrique pour le relais de reproduction n'est pas nécessaire ; et
la connexion du premier port de communication au quatrième port de communication (3) dans le cas où un dispositif de communication qui communique avec le premier dispositif de communication (A) est sous la commande d'une base différente de la base hôte et le traitement électrique pour le relais de reproduction est nécessaire.

7. Procédé de communication optique comportant :
une étape de commutation de connexion visant à connecter, par une pluralité d'unités de commutation de connexion (20c), un premier port de communication à un deuxième port de communication (4), un troisième port de communication (1) et un quatrième port de communication (3) ;
une étape de multiplexage/séparation de signal visant à multiplexer une sortie de signal de chacune de la pluralité d'unités de commutation de connexion, connecter le premier port de communication à un premier dispositif de communication (A) sous la commande d'une base hôte, qui est un dispositif qui exploite un réseau de transmission, connecter le deuxième port de communication (4) à un deuxième dispositif de communication (B) sous la commande de la base hôte, connecter le troisième port de communication (1) à un troisième dispositif de communication (C) sous la commande d'une autre base, et connecter le quatrième port de communication (3) à une unité de traitement électrique (80c) par l'intermédiaire d'une unité de multiplexage/séparation de signal (70c), l'unité de traitement électrique (80c) effectuant un traitement électrique pour un relais de reproduction sur un signal envoyé à un quatrième dispositif de communication (C) sous la commande de l'autre base ; et
une étape de commande visant à commander la commutation de connexion des ports de communication à l'étape de commutation de connexion en fonction de la base à laquelle appartient le dispositif de communication communiquant avec le premier dispositif de communication et selon que le traitement électrique est nécessaire ou non,
**caractérisé en ce que** l'étape de commande comporte :
la connexion du premier port de communication au deuxième port de communication (4) dans le cas où un dispositif de communication qui communique avec le premier dispositif de communication (A) est sous la commande de la base hôte ;
la connexion du premier port de communication au troisième port de communication (1) dans le cas où un dispositif de communication qui communique avec le premier dispositif de communication (A) est sous la commande d'une base différente de la base hôte et le traitement électrique pour le relais de reproduction n'est pas nécessaire ; et
la connexion du premier port de communication au quatrième port de communication (3) dans le cas où un dispositif de communication qui communique avec le premier dispositif de communication (A) est sous la commande d'une base différente de la base hôte et le traitement électrique pour le relais de reproduction est nécessaire.

8. Procédé de communication optique selon la revendication 6, dans lequel à l'étape de commutation de connexion, l'un des N (N est un numéro naturel arbitraire) ports de communication et l'un des M (M est un numéro naturel arbitraire) ports de communication sont sélectionnés, et une connexion est établie entre les ports sélectionnés, et
le premier port de communication est l'un des N ports de communication, et chacun du deuxième port de communication, du troisième port de communication, et du quatrième port de communication est l'un des M ports de communication.
